(19) **Europäisches Patentamt**
**European Patent Office**
**Office européen des brevets**

(11) **EP 2 951 720 B1**

(12) **EUROPEAN PATENT SPECIFICATION**

(45) Date of publication and mention
of the grant of the patent:
**02.05.2018 Bulletin 2018/18**

(51) Int Cl.:
**E21B 43/00** *(2006.01)*    **E21B 41/00** *(2006.01)*

(21) Application number: **14745919.2**

(22) Date of filing: **31.01.2014**

(86) International application number:
**PCT/US2014/014320**

(87) International publication number:
**WO 2014/121147 (07.08.2014 Gazette 2014/32)**

(54) **PRODUCTION ANALYSIS AND/OR FORECASTING METHODS, APPARATUS, AND SYSTEMS**

PRODUKTIONSANALYSE UND/ODER VORHERSAGEVERFAHREN, VORRICHTUNG UND SYSTEME

PROCÉDÉS, APPAREIL ET SYSTÈMES D'ANALYSE ET/OU DE PRÉVISION DE LA PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2013 US 201361759118 P**

(43) Date of publication of application:
**09.12.2015 Bulletin 2015/50**

(73) Proprietor: **Betazi, LLC**
**Truckee, California 96161 (US)**

(72) Inventors:
• **ARORA, Nimar S.**
**Union City, California 94587 (US)**
• **KUZMA, Heidi A.**
**Truckee, California 96161 (US)**
• **CONRADSON, Janette**
**Truckee, California 96161 (US)**

(74) Representative: **Hanna Moore + Curley**
**Garryard House**
**25/26 Earlsfort Terrace**
**Dublin 2, D02 PX51 (IE)**

(56) References cited:
**US-A- 5 539 704**      **US-A1- 2001 042 642**
**US-A1- 2007 168 133**   **US-A1- 2008 162 099**
**US-A1- 2011 225 111**   **US-A1- 2011 225 111**
**US-A1- 2011 238 611**   **US-A1- 2011 238 611**

• **GUSTAVSSON ET AL.: 'SIMULTANEOUS CHANNEL AND SYMBOL MAXIMUM LIKELIHOOD ESTIMATION IN LAPLACIAN NOISE.' 1998, XP010336151 Retrieved from the Internet: <URL:http://lup.lub.lu.se/luur/download?func=downloadFile&recordOld=10560828fileOld=1 0 56851> [retrieved on 2014-05-18]**
• **MILCH ET AL.: 'Extending Bayesian Networks to the Open-Universe Case.' 29 December 2009, XP055213918 Retrieved from the Internet: <URL:http://www.cs.berkeley.edu/ ~ russe ll/papers/pearlbook10-blog.pdf> [retrieved on 2014-05-18]**

**Description**

## BACKGROUND

Estimates of future production and Estimated Ultimate Recovery (EUR) from oil, gas, and water wells are often inaccurate and can be heavily biased by the practice of fitting production curves by hand using smooth mathematical models. Furthermore, it is difficult, if not impossible, to accurately model, analyze and predict the effects of multi-phase (oil, gas and water) production from the same well; re-pressurization of a well after shut-ins; the effect of well stimulations; hydro fracturing; choke adjustments and changes of pressure; transient flow regimes; time-dependent permeability; and/or other factors. Moreover, it may or may not be possible to physically monitor such factors during production to even gain data pertinent thereto.

Furthermore, because production data tends to be noisy, many different models (or mathematical curves) with the same or differing form can be fit to the same data. The noise arises from a number of sources including those mentioned above as well as certain operational considerations. For instance, pumps and other equipment sometimes fail leading to potentially large production swings. Furthermore, many field owner/operators and/or other users practice production "allocation." In other words, many wells will feed one common storage or accumulation tank with the combined and measured outflow (that is "production") being allocated between those wells. Obviously, these allocations can be inaccurate leading to noise in the production measurements. Further still, the actual production from any given well can vary with time leading to noise in that even once accurate allocations become inaccurate over some time frame.

Of course, well tests in which the production from one or more wells is measured and used to calibrate (or adjust) the allocation can potentially alleviate some of these concerns. Some states mandate that these well tests are performed on a regular basis, but even then allocations are subject to inaccuracy. For instance, some operators who perform the test might round results up, others might round down, and some operators might not care enough to obtain and/or report accurate results at all.

Furthermore, often during the life cycle of a well, the production regime of the well changes. For example, the well might pass into a new so-called flow regime where fluids are being driven toward the well because of a different mechanism. An example of natural mechanism change would be that the flow regime changes from desorbtion along artificially induced fracture boundaries to that of the native permeability of a formation. An example of man-made flow changes would be that a new pump or form of artificial lift was introduced into the well.

All of these forms of noise accumulate and can render so-called production "measurements" inaccurate or misleading. When field owners use such noisy historic figures to forecast future production, that noise can lead to highly varying projections. Aggravating the situation, most algorithms for production analysis return only one forecast which means that the effects of the cumulative noise remain unknown even if they are appreciated at some minimal or subconscious level. In other words, owner/operators sometimes suspect that their production forecasts are suspect. Yet, heretofore, they have had no better way to forecast future production or analyze past production.

US-2008/0162099-A1 describes a method for characterizing a fractured wellbore involves obtaining static data and production data from the fractured wellbore, integrating the static data and the production data using Bayes's theorem, and calculating a plurality of model parameters from Bayes's theorem, where the plurality of model parameters is used to alter completion of the fractured wellbore.

## SUMMARY

The present invention provides apparatus comprising a processor configured to perform methods of modelling production of a well, and computer-readable storage media pertaining thereto, in accordance with claims which follow. The current disclosure provides systems, apparatus, methods, etc. for performing physically-based well-production analyses and more specifically for performing physically-based well-production analyses using open universe, generative models. Moreover, some of these models use Bayesian statistics, sparse sampling, and/or non-Gaussian noise assumptions.

Instead of using a fixed (or deterministic) function to describe well decline (or production), methods provided herein use a probabilistic knowledge representation. That knowledge representation combines physics with statistics and owner/operator experience thereby accounting for the physical characteristics of the wells, the equipment used therein, and well events (colloquially, "rocks, hardware, and operations"). The knowledge representation of embodiments is an open universe model which accounts for things that might (but don't always) happen during the life of a well. Thus, despite these events, systems of embodiments allow for production to be monitored and an alarm to be raised should a well fall below its predicted production.

Embodiments provide well analysis and forecasting methods which are unbiased, transparent, repeatable, and which execute rapidly on computers. These models can be fully automated and calibrated for use with oil, gas, water, etc. production. For instance, some methods can produce calibrated P10, P50, P90, etc. numbers. Instead of a single Estimated Ultimate Recovery (EUR) number, various methods produce histograms and outcomes which allow users to explore the probabilistic range of EURs. The P90 numbers (or ranges) provided by some methods enjoy a high degree of confidence (90%) that they will indeed be exceeded in a given time (such as 15 years).

Furthermore, the current disclosure provides tools for analyzing past, and forecasting future, well production. Many of these tools are based on the physical features of the well and on probabilistic treatment of historic production data. Moreover, embodiments reduce risks associated with production forecasts (both short term and long term) by providing a range of probabilistic production curves and by quantifying the uncertainty associated with these curves. Embodiment also, or in the alternative, safeguard trillions of dollars that would otherwise be exchanged based on outdated, manually manipulated decline curves. Owners, operators, national governments, etc. can use these production forecasts to value their reserves with reduced uncertainty.

The current disclosure provides methods for analyzing historic production data and for forecasting future production of oil wells which account for noise in the available production data and the shift of wells into new production regimes. These methods use probabilistic techniques to develop a model of the well (or a knowledge representation) from which an inference algorithm draws statistical samples of what the well production might have been and/or what the well production is likely to be in the future. In general, and in accordance with the current embodiment, many methods draw individual parameters from a knowledge representation and generate probabilistic production curves or "samples" of those production curves. Thus, rather than producing one fixed or deterministic model (that fails to account for probable events during the life of the well), methods of the current embodiment produce a range of possible decline (production) curves. From this population of decline curves, these methods produce statistics concerning the probability that the individual decline curves did match, or will match, the actual production. For instance, these methods can identify a P90 decline curve as well as decline curves associated with selected amounts of uncertainty.

Probabilistic inference systems provided by embodiments are both well parameterized and well calibrated. More specifically, the models incorporated in these systems have a number of parameters which have proven to be neither too few nor too many for many wells. In other words, the production curves they produce have a level of complexity that is neither too simple (and inaccurate) nor too "high-end" (requiring relatively large computing resources). Regarding their calibration, while probability distributions are used to characterize the equations and/or their parameters, the types of equations used in the models were determined with a relatively high precision by experienced statisticians using actual well data from oil, gas, and water producing wells.

Moreover, in accordance with embodiments, the current disclosure provides a physically-based, probabilistic (well) production, analysis system (PPAS). The PPAS of the current embodiment can he used to probabilistically determine past well production as well as forecast future production based on noisy historic data regarding the production of a given well(s). That input production data can come in the form of production records of oil, gas and/or water produced by a well (possibly, but not necessarily, including other relevant production information such as well pressure, choke, stimulation and/or shut-in time durations)

The PPAS of the current embodiment uses a physically-based probabilistic knowledge representation combined with a statistical inference algorithm to search for production models which have relatively high probability of being accurate and which arc consistent with the observed data. These probabilistic models can then be projected forward to make future production forecastsand/or estimated ultimate recovery (EUR) forecasts. Not only can the PPAS of the current embodiment explain past production, but it is also capable of explicitly modeling features suggested by the production record such as shut-ins, well stimulations and changes of production regime. It also has the capability to suggest the probability that particular future events (such as welt stimulations) will occur. Furthermore, to reduce processing requirements, the PPAS of the current embodiment can use sparse sampling at/near suspected well events (in the production data) to detect, analyze, and/or model such events. For instance, the PPAS can predict flow regime changes, stimulations, etc.

The PPAS of the current embodiment generally comprises two components: a knowledge representation (KR) of the well and an inference algorithm (IA). In some embodiments, the knowledge representation models the physical nature of the well and/or statistical know ledge of the well in a statistical, open universe framework with a user-selected degree of mathematical rigor. More specifically, the knowledge representation can model physical features of the well using various physical parameters associated with a mathematical model of the well. The inference algorithm of embodiments uses the well model (the knowledge representation) to evaluate the possibility that various well-related events, scenarios, etc. occurred during the history of the well and the possibility that these events might occur in the future. Moreover, inference algorithms can be optimized to search over the probabilistic physical parameters to evaluate these possibilities. For instance, the inference algorithm can use sparse sampling to evaluate these potentialities.

If desired, PPASs can comprise interactive graphical user interfaces (GUIs) and can import or access the production data imported through spreadsheets, databases, relational databases, files, etc. These PPASs can generate spreadsheets, databases, relational databases, files, etc. as well as graphs, charts, plots, pictures, and/or other graphical renderings through which the generated data can be output, uploaded, viewed, transmitted, evaluated, etc. Moreover, while various PPASs can execute on particular computers (for instance, a laptop computer), distributed, Internet-based, "cloud-based," etc. computing systems can be employed to execute such PPASs.

Embodiments, provide computer readable storage media storing instructions which when executed by a processor cause the processor to perform methods comprising modeling a production of a well. Furthermore, such methods comprise determining probability distributions for physical parameters associated with the well by training the model of the well with sparsely sampled historic data pertinent to the production of the well. These methods also comprise determining posterior distributions for the sparsely-sampled model by sampling probability distributions associated for the physical parameters. The methods also output the posterior distribution for the sparsely-sampled model of the well. In some embodiments, the methods further comprise adding non-Gaussian (Laplacian) noise to the sparsely-sampled model.

Various embodiments provide computer readable storage media storing processor executable instructions which when executed by the processor cause the processor to perform methods comprising modeling a production of a well and determining physical parameters associated with the well. Probability distributions for those physical parameters are determined by training the statistical model with historic data pertinent to the production of the well. Such methods also comprise determining posterior distributions for the model by sampling the probability distributions for the physical parameters. Adding non-Gaussian (Laplacian if desired) noise to the sparsely-sampled model and outputting the posterior distribution tor the model of the well are included in such embodiments.

Some embodiments provide methods for modeling the production of various wells using processors. In some embodiments, the methods comprise modeling a production of a well. Furthermore, such methods comprise determining probability distributions for physical parameters associated with the well by training the statistical model with historic data pertinent to the production of the well. Such methods also comprise determining posterior distributions for the model by sampling the probability distributions for the physical parameters. Additionally, these methods comprise determining a posterior distribution for a future production of the well using the posterior distributions for the model of the well. Of course, these methods further comprise outputting the posterior distribution for the future production of the well based on the posterior distribution for the well.

In accordance with some embodiments, the model of the well is based on Bayesian statistics. Methods can also comprise adding Laplacian noise to the model of the well in accordance with geophysical properties thereof. In the alternative, or in addition, methods can comprise modeling a financial model of the well based on at least the posterior distribution for the model of the well. Some methods comprise using Markov Chain Monte Carlo sampling to converge on the posterior distributions for the model. If desired, an estimated ultimate recovery (EUR) estimate for the well can be determined. Quantifying an uncertainty associated with the posterior distribution for the future production of the well can be included in various methods. In some methods the training of the model of the well further comprises using historical data associated with an initial completion of the well, a shut-in of the well, a secondary stimulation of the well, or a combination thereof. The posterior distribution for the future production of the well is compared to a manually fit production forecast in some methods. Also, if desired, some methods comprise modeling multi-phase flow in the well using a model of a plurality of linked chambers in the well. Apparatus comprising interfaces, processors, and memories storing processor executable instructions for performing such methods are also provided.

To the accomplishment of the foregoing and related ends, certain illustrative aspects are described herein in connection with the annexed figures. These aspects are indicative of various non-limiting ways in which the disclosed subject matter may be practiced, all of which are intended to be within the scope of the disclosed subject matter. Other novel and nonobvious features will become apparent from the following detailed disclosure when considered in conjunction with the figures and are also within the scope of the disclosure.

## BRIEF DESCRIPTION OF THE FIGURES

The detailed description is described with reference to the accompanying figures. In the figures, the left-most digit(s) of a reference number usually corresponds to the figure in which the reference number first appears. The use of the same reference numbers in different figures usually indicates similar or identical items.

Fig. 1 illustrates a system for modeling wells.
Fig. 2 illustrates a knowledge representation of a well.
Fig. 3 illustrates a knowledge representation of a production forecast for a well.
Fig. 4 illustrates a histogram showing the time-to-peak in various wells.
Fig. 5 illustrates a gamma distribution of peak-production data.
Fig. 6 illustrates a histogram of a first well decline coefficient.
Fig. 7 illustrates a second well decline coefficient modeled as an exponential distribution.
Fig. 8 illustrates a graph of the relative production decreases during down pulses.
Fig. 9 illustrates a graph of the time-to-lowest-production afterdown pulses.
Fig. 10 illustrates a graph of time-to-peak data modeled as an exponential distribution.

Fig. 11 illustrates a graph of time-to-peak data modeled as a discrete distribution.
Fig. 12 illustrates noise modeled using a Laplacian Distribution.
Fig. 13 illustrates a well forecast.
Fig. 14 illustrates a predicted well stimulation.
Fig. 15 illustrates a comparison between a well production (distribution) forecast and well test data.
Fig. 16 illustrates a net present value prediction for a well.
Fig. 17 illustrates predicted anomalous production after well shut-ins.
Fig. 18 illustrates estimated flow modes within a well.
Fig. 19 illustrates a method of modeling well production.
Fig. 20 illustrates another method of modeling well production.
Fig. 21 illustrates some percentile accuracies of a method of modeling well production.

## DETAILED DESCRIPTION

This document discloses systems, apparatus, methods, etc. for performing physically-based well-production analyses and/or forecasting and, more specifically, for performing physically-based well-production analyses and forecasting using Bayesian statistics, sparse sampling, and Laplacian, Gaussian, and or other forms of noise to analyze and forecast production from various petrochemical wells.

Embodiments provide physically-based probabilistic, analysis/forecasting systems, apparatus, and methods. Such systems can provide more accurate analyses and or forecasting for production from various wells) such as those which produce water, oil, natural gas, other petrochemicals, etc.) than heretofore available. Some analysis systems include a knowledge representation of the well(s) which are in communication with an inference algorithm. These systems receive inputs from available data sources and return outputs in relatively easily understood format. These systems can he run on single computers, distributed networks, tablets, smartphones, or other computing devices. In some situations, servers can host the systems with users accessing the systems via client devices and/or networks.

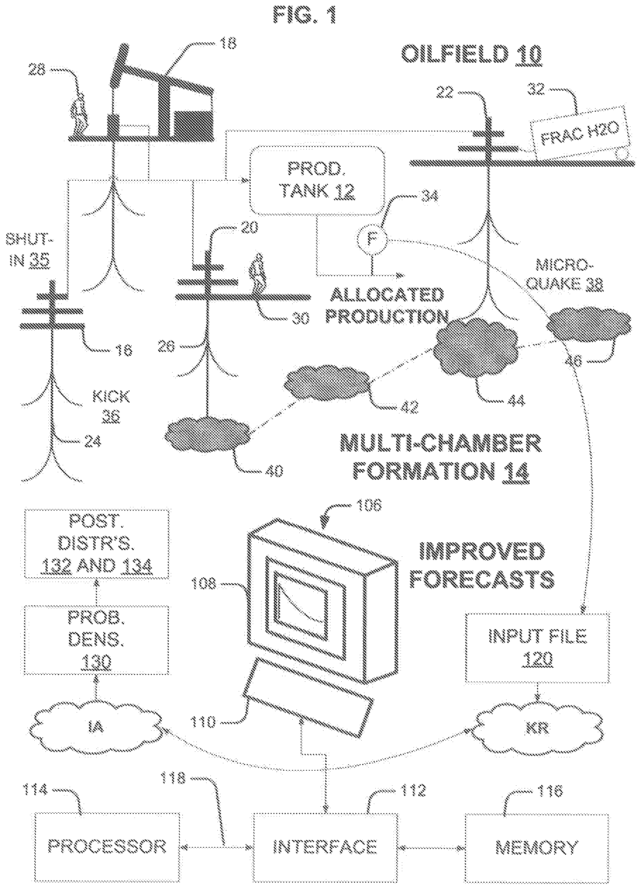

Fig. 1 illustrates a system for modeling wells. More specifically, Fig. 1 illustrates an oilfield 10, a production tank 12, a multi chamber formation or well 14, wellheads 16, 18, 20, and 22, well bores 24 and 26, well testers 28 and 30. a frac tank 32, a flow meter 34, a "kick" 36, a micro-quake 38. and chambers 40, 42, 44, and 46. Fig. 1 also illustrates a system 100, a computer 106, a display 108, a keyboard 110, an interface 112, a processor 114, a memory 116. a bus 118, a production input file 120, a knowledge representation (or well model) 122, an inference algorithm 124, probability densities 130. model posterior distribution 132, and forecast posterior distribution 134.

With continuing reference to Fig. 1. oilfields 10 represent a source of wealth, value, revenue, income, etc. to their owners, operators and others (i.e., users) who might have invested therein or otherwise have an interest therein. It might cost many millions of dollars to develop an oilfield 10 for which the initial exploration represents only a fraction of that investment. Following exploration (during which these parties attempt to quantify the amount of recoverable oil, other petrochemicals, water, fluids, etc. present "in" the field), they might invest millions (or even billion) more in developing the oilfield 10. For instance, these parties typically identify and map the formations that likely bear these fluids (and/or "petrochemicals"). Moreover, they also typically identify (from telltale clues provided by the formations) well 14 sites likely to produce fluids in sufficient volume to provide an economic return on investment. They then drill wells 14 in anticipation of profits from selling or otherwise using the produced fluids petrochemicals.

If they made wise investments, the wells 14 begin producing at or above a particular volume or flow rate often termed a "P90," P90, of course, refers to that anticipated time-varying flow rate which the well 14 will equal (or exceed) as actual production commences (or continues). If the well 14 exceeds its estimated P90, the owner operators (having likely based their financial plans on that P90) will probably enjoy a profit. If the actual production of the well 14 falls below its estimated P90, the owners stand likely to realize a negative return on their investment. They suffer a loss, Thus, determining a "good" P90 number has been of significant interest to those involved in oilfield 10 exploration, development, operations, etc. Companies, moreover, often succeed or fail based on their ability to determine P90 correctly -- taking their employees, investors, and the like with them one way or another.

Yet, a P90 figure (as such) might be somewhat misleading. Any particular well 14 will not produce according to a single, fixed, and/or deterministic flow rate. Many variables, too numerous to enumerate herein affect the actual production of the well 14. While the art does not seem to recognize it, the inventors have realized that P90 (and/or the actual production) of the well can he characterized as a probabilistic concept. In other words, P90. the historic production, and/or the future production of a well 14 can be viewed as a time varying figure with a probable time-varying range (at any given time). Further still, the production of a well 14 can be characterized over time by a graph something akin to a function wherein that function (or equation) has various terms including various parameters. Each of the parameters can be treated as a range of values with a probabilistic distribution. Determining the probabilistic ranges for the parameters (and/or terms) thus leads, in accordance with embodiments, to posterior distributions for those parameters. These posterior distributions (for the parameters) can be used to identify (probabilistic) historic productions as well as to forecast (probabilistic) future production.

Still with reference to Fig. 1, some of the reasons that even the historic production of the well 14 can be viewed as a probabilistic time varying number is that, in many cases, that actual time varying number cannot be readily determined. In the alternative, or in addition, so much noise might be associated with the actual time-varying, historic production that drawing meaningful conclusions regarding what the true historic production of the well is/was represents a heretofore insurmountable challenge. Embodiment provide methods, systems, apparatus, etc, which at least provide aid in overcoming those challenges and/or perhaps others.

Having discussed such considerations of typical wells 14, it might flow be helpful to consider a typical oilfield 10 and related computer 106. See Fig. 1. Such oilfields 10 occur in many locations worldwide and parties interested therein discover more oilfields 10 with each passing day. They occur in desert regions, artic regions, on-shore, offshore, "in"(i.e., above) shale deposits, in sedimentary basins, and in many other environments. Some oilfields 10 happened to he suspected, known, explored, developed, depleted, etc, to differing degrees. At some stage of their life, though, many of them sometimes reach a stage such as that illustrated by Fig. 1. In Fig. 1, the oilfield 10 includes a number of wellheads 16, 18, 20, and 22. Each of the wellheads 16. 18, 20, and 22 has installed therein various production (and/or exploration) equipment such as blowout preventer stacks (BOPs) or more broadly "Christmas trees," pumps (see wellhead 18), and stimulation equipment (see for instance frac tank 32 at wellhead 22).

The owner/operators often route the production (or outflow) of various wells 14 to a common production tank 12. The production tank 12 of various embodiments provides a common place at which the production of many wells 14 can he collected for transmission and/or transport to refineries and/or other points of use. While reasons vary for routing the production of many wells 14 to one common collection point, one reason for doing sois that many wells 14 in a geographic region happen to be commonly owned or at least subject to some common royalty, licensing, or other assignment-related arrangement. Thus, for the owner operators it sometimes makes sense to provide such a common collection point. For such reasons, oilfields 10 often have one common flow meter 34 which makes actual measurements of the cumulative production of many wells 14. But, in some situations, ownership of the oilfield 10 might be fragmented. Thus, the cumulative production of an oilfield 10 can be allocated (often as a matter of convenience) amongst the various wells 14 that flow to the production tank 12.

In other words, each well 14 is said to be "allocated" some fraction of the cumulative production at (or downstream of) the common collection point or production tank 12. indeed, in many oilfields 10, the flow meter 34 is positioned downstream of the production tank 12 to measure the cumulative flow therefrom. Yet, while the flow meter 34 might/might not provide accurate measurements of that cumulative production, it simply cannot account for allocation-related inaccuracies. Nor can it account for sources of inaccuracy in how its measurements are subsequently handled (assuming those measurements are accurate or taken at all).

Still with reference to Fig. 1, many oilfield 10 owner/operators attempt to minimize allocation errors by, for instance, performing (periodic) "well tests" at the wellheads 16, 18, 20, and/or 22. During a typicalwell test, reservoir engineers attempt to acquire data regarding the ability of a well 14 to produce the petrochemicals for which it was developed. Data gathered often includes well pressure and/or well flowrate (whether volumetric, weight-based, or otherwise) or the well's production. 'In theory, a well test therefore allows the owner/operators to adjust the allocated production for each well 14 delivering petrochemicals to a given point of collection.

In practice, the outcome might differ from theory For one thing, well tests between different wells 14 might differ in accordance with who owns (and/or controls) the well 14 in question. Additionally, differing well testers 28 and 30 might perform even (ideally) identical well test procedures on even the same well 14 in different manners. Results would, of course, vary. For instance, one well tester 28 might round results up to the nearest 1000 barrels day while another well tester 30 might round results down to the nearest 100 barrels day. Moreover, some wells 14 might or might not he tested on a regular basis or at all. Further still, some well testers 28 might care greatly about their performance and provide accurate results, while other well testers 30 might care relatively little about their performance thereby providing results of dubious reliability For instance, suppose a particular well tester 30 simply copied and submitted a previous well-test report from when a well 14 was (for a time) shut-in. As a result, while the allocated (and even adjusted) production for the various wells 14 might accurately reflect the actual production of each of the wells 14, it is probably the case that the allocated production for any given well 14 could be wildly inaccurate. Yet it is these numbers that various users employ in judging historic, current, and/or forecast production numbers for the wells 14 involved. Thus, production estimates for any given well 14 and/or related oilfields 10 can be subject to noise which is difficult to quantify.

At this juncture, it might be helpful to consider some other typical features of an oilfield 10. For instance. Fig. 1 illustrates that it is believed that many wellheads 20 draw fluid from subterranean, multi-chamber wells 14. These formations include one or more chambers 40, 42, 44. and 46 which are in fluid in communication with one another (and the wellhead 20). Of course, fluid communication here is something of a relative term. The chambers 40, 42, 44, and 46 are unlikely to be large voids in the surrounding rock (or other earthen materials). Rather, the chambers are more likely to be volumes within the rock wherein the rock exhibits a high degree of porosity. The connections between such "chambers" are also likely to be permeable regions rather than caves although a mixture of such features could be present in any given multi-chamber 40. 42, and/or 44 formation.

The presence of a multi-chamber formation in a given well 14 is likely to contribute to the noise associated with that well 20. This result is so, because as the various fluids (which might partially or entirely separate from one another) migrate or flow through the multi-chamber well 14, their interaction with the chambers 40. 42, and/or 44 could cause the composition of the "oil" produced by the well 14 to vary. For instance, oil in one chamber 40 might become momentarily depleted allowing a volume of water from another chamber 42 to enter the well bore. Asa result, the "production" of well 14 might change to a more heavily water-loaded mixture than before/thereafter. Moreover, the flow rate of that overall mixture (and/or the amount of true oil therein) might also vary. As a result, production forecasts which fail to take into account the potential multi-phase, multi-chamber nature of at least some wells 14 might be less accurate than would otherwise he the situation. This is true, at least in part, because natural "flow regime changes" can and do occur because the various chambers have different inherent sizes, permeabilities, etc, Each one therefore contributes differently to the overall production of the well(s) to which they flow

Moreover, the physical factors of some wells 14 and or wellheads 18 might cause a phenomenon known as "kick." A kick 36 occurs when the pressure in the well formation exceeds the pressure imposed in the well bore 24 by the column of drilling (and/or other) fluids therein. A net and potentially uncontrollable flow into the well bore 24 can develop which, if unchecked, could lead to a relatively large leakage. Thus, owner/operators often install blowout preventer (BOP) stacks on the "Christmas trees" of various wells 14. If these owner/operators detect or suspect that a kick 36 has begun or that a well 14 threatens a kick 36. they can use the BOP stack to shut-in the well 14. Of course, while the shut-in 35 persists, no or little production occurs at the affected well 14. If the allocated production of the oil well 14 fails to take the shut-in 35 into account, yet another source of noise injects itself into the production history of that well 14. Moreover, in an allocation scheme, that decreased production might be attributed to other commonly collected wells 14.

Fig. 1 also illustrates yet another source of noise related to the production of various wells. Under a number of scenarios, oilfield owner/operators find it desirable to stimulate further production in particular wells, oilfields 10, or portions thereof. For instance, as wells 14 produce petrochemicals it often occurs that the pressure in the well formation drops accordingly. This pressure drop in turn leads to reduced production (flow) from the affected well 14 making the well less economic to operate. Thus, the owner/operator of that well 14 might inject gas, water, or other fluids into the well to increase the pressure thereby (hopefully) driving more production from the well 14.

For instance, lately, hydraulic fracturing has fueled "booms" in oilfields 10 in (inter alia) the Bakken and Eagle-Ford shale formations in respectively North Dakota and Texas. Hydraulic fracturing often involves pumping pressurized fluids into a well drilled into an oil-bearing shale formation. Ordinarily, the relatively impermeable, non-porous shale in such formations traps the petrochemicals present in the formation. However, the pressurized fluid forced into the wellbore of such wells flows into small cracks in the shale. As it does so, it exerts a force on the surfaces of the crack. Eventually, the shale fractures creating a network of cracks near each such fracture. The pressurised fluid conveys solid "proppant" into the cracks which wedges the cracks open even after pressure is removed, As a result, the permeability of the shale formation increases significantly allowing more production than would otherwise be the case. Fig. 1 illustrates such operations via frac tank 32.

One perhaps interesting feature related to tracking is the occurrence of so-called micro-quakes 38. Micro-quakes 38 occur when a particular piece of shale (or other rock earthen material, etc.) fractures during fracking. Each such fracture event represents a release of a relatively small amount of energy. Indeed, that released energy is typically about the energy released by metabolizing a chocolate bar. Some of the released energy propagates through the shale formation in the form of a pulse of sound. As such, this sound energy, or micro-quake, can be monitored by seismic exploration equipment which allows various algorithms to map the formations through which this sound propagates. This mapping, in turn, can be used to improve various mathematical models (or knowledge representations) of the fracked well.

In accordance with embodiments, production data can be gathered from the oilfield 10. the common flow meter 34, and/or various wellheads 18, 20, and/or 22. That production data can be incorporated into a data file for input into the computer 106 for analysis, storage, re-transmission, etc. That input file 120 can take any form capable of storing, transmitting, etc, the production data. For instance, it could be a spreadsheet, a series of tables in a relational database, an Internet (or Cloud) streaming source, etc.

With regard to analysis of the production data in the input file 120, computers 106 of some embodiments host the knowledge representation 122 and/or the inference algorithm 124. Together, they work to respectively model the physical structure of a well or wells 14 and determine probabilistic historic production estimates and probabilistic production forecasts. Moreover, these modules, programs, algorithms, etc. can be designed together to, for instance, account for peculiarities which one or more owner/operators might want to model. For instance, it occurs from time-to-time that owner/operators might have come to recognize a category of well 14 that behaves in some distinguishing manner. For instance, despite the likelihood that the production of most wells 14 will decline with time (other factors being equal), some wells 14 "just keep producing no matter what." For another instance, some knowledge representations 122 can model multiple stratigraphic horizons, time-dependent permeability, customised warnings, aggregate production data from multiple wells, national reserve valuation, etc. The knowledge representations 122 and inference algorithms 124 of embodiments can be designed together to account for such user-identified analysis, forecasting issues.

The knowledge representation 122 of embodiments produces probability distributions of the well's physically-based parameters. Meanwhile, the inference algorithm samples those probability distributions to converge on posterior distributions for thesephysically-based parameters of the well model (i.e., the knowledge representation 122) which describes the behavior of the well 14. In doing so, the inference algorithm 124 can use any of the available statistical sampling methods (for instance, Markov Chain Monte Carlo sampling) and/or those that will arise in the future. Using these physically-based parameters (and/or their posterior distributions), the inference algorithm 124 can project backward/forward in time to give posterior distributions for the likely production of the well 14 at any user-selected time(s) and/or period(s).

Still with reference to Fig. 1, the knowledge representation 122 of the current embodiment is a series of subroutines and/or mathematical models which probabilistically describe the physical structures of a well 14 and other factors pertinent to its production (such as those disclosed herein) and the statistical/probabilistic relationships there between.

The knowledge representation 122 of embodiments can be used in conjunction with other production estimating, forecasting, predicting, etc. techniques. For instance, supplementary production forecasts can be made using various decline curve analysis tools/approaches. Many of these approaches fit "smooth" curves described by relatively simple equations to available production data. These equations are often hyperbolic, elliptical, etc. in nature and one such tool in common use is the Arps tool. However, these "fit" curves usually need to he manually adjusted to attempt to account for noise in the available production data. Making these manual adjustments usually requires years of experience, introduces subjectivity to the anal) sis, and allows room for argument as to the accuracy of the adjusted results. For instance, these manual adjustments depend on, and can be skewed by, the opinions and/or objectives of the user who made them. Methods provided herein often outperform such subjective methods. For example, it is common practice to adjust a curve so that it returns an EUR which was assigned to a well by other means. In affect, this forces the data to fit a preconceived notion, a practice of perhaps dubious value.

For another instance, type curves can be used to guide/begin some production analysis. On that note, for many wells 14. production can be expected to be similar to the production of other wells 14 in the same oilfield 10, play, region, etc. Thus, users can develop a type curve for the new/modified well 14 by averaging available production data from these other supposedly similar wells 14. The production for that given well 14 is then estimated by multiplying the type curve for the new well's locale by factors which represent the initial production and/or the new well's geometric geophysical configuration to arrive at a curve supposedly representative of the production which might be expected from that well 14. However, wells 14 can be expected tu differ from one another. For instance, the thickness of their pay zones might differ, they might have different well treatments, initial productions might vary, etc. Users might therefore need to make manual adjustments to the type curve to account for these differences. As a result, errors, inconsistencies, omissions, etc. can occur leading to inaccurate and or unreliable results. Moreover, usually, users develop type curves over extended periods of time which enjoy, to some extent, quasi steady state production. While type curves can be used with embodiments, the use of type curves is not necessary for practicing many embodiments.

In contrast to the use of type curves, methods provided herein can use production data from the initial ramp up of a well 14 which might reflect many shut-ins and/or other non steady state well-events (that would produce misleading results with heretofore available approaches). Even in the presence of that noise, methods provided herein do not become confused and can relatively accurately predict the beginning of the declining portion of a decline curve for a well 14. Note also that, once an inference algorithm 124 produces a (probabilistic) decline curve for one or more wells 14 in an oilfield 10, that decline curve can be used as a type curve for other wells 14 in the oilfield 10.

In addition, or in the alternative, history matching can be attempted for a particular well 14 in conjunction with methods disclosed herein. History matching entails setting up a relatively complex, yet fixed and/or deterministic, numerical model of a well 14 and finding a fixed set of parameters which cause the results of the deterministic model to (more or less) match the available production data however noisy it might be. Note that history matching results in one fixed/deterministic equation that docs not necessarily account for noise, operational considerations, the probabilities that various well-related events will occur, etc.

Moreover, history matching is not probablistic. It returns only one answer. In history matching, a deterministic model is built and, therefore, it always gives that same answer. The knowledge representation 122 of embodiments yields different outcomes every time its run because it draws many of its parameters from probability distributions in contrast to running inputs through fixed equations Moreover, one difference between such deterministic models and generative models (or, in the current embodiment, the knowledge representation 122) is that deterministic models accept their inputs (such as permeability, formation thickness, etc.), run, and deliver one answer. In contrast, generative models execute and produce many reasonable production curves by drawing on its "priors" or statistical models. Indeed, the number of production curves that a generative model might product is limited only by the number of permutations of the parameters therein, their values, and the time available for execution.

Used alone, manual curve fitting, type curves, and even history matching can leave errors and/or discrepancies in the expected production. Since these errors accumulate over time, even small errors can lead to huge discrepancies in the cumulative production and or EUR of the well 14. The errors inherent with heretofore available approaches can also affect the projected economic lite time of a well 14 (or other project) thereby introducing risk into owner operator planning over and above that associated with moves in the price of oil and/or other produced fluids. Embodiments usually reduce such errors leading to more accurate production and or EUR forecasts in many situations. Computer applications, programs, etc. incorporating methods of embodiments and related services, apparatus, systems, etc. are available from BetaZi, LLC of Truckee, CA.

Still with reference to Fig. 1. a few words might be in order about the computer(s) 106 and or other systems, apparatus, etc. used to design, store, host, run, execute, etc. knowledge representations 122 and or inference algorithms 124 of embodiments. The type of computer 106 used for such purposes does not limit the scope of the disclosure but includes those now known as well as those which will arise in the future. But usually, these computers 106 will include some type of display 108, keyboard 110, interface 112, processor 114, memory 116, and bus 118.

Furthermore, any type of human-machine interface (as illustrated by display 108 and keyboard 110) will do so long as it allows some or all of the human interactions with the computer 106 as disclosed elsewhere herein. Similarly, the interface 112 can be a network interface card (NIC), a WiFi transceiver, an Ethernet interface, etc. allowing various components of computer 106 to communicate with each other and/or other devices. The computer 106, though, could be a stand-alone device without departing from the scope of the current disclosure.

Moreover, while Fig. 1 illustrates that the computer 106 includes a processor 114, the computer 106 might include some other type of device for performing methods disclosed herein. For instance, the computer 106 could include an ASIC (Application Specific Integrated Circuit), a RISC (Reduced Instruction Set IC), a neural network, etc. instead of, or in addition, to the processor 114. Thus, the device used to perform the methods disclosed herein is not limiting.

Again with reference to Fig. 1, the memory 116 can be any type of memory currently available or that might arise in the future. For instance, the memory 116 could be a hard drive, a ROM (Read Only Memory), a RAM (Random Access Memory), flash memory, a CD (Compact Disc), etc. or a combination thereof. No matter its form, in the current embodiment, the memory 116 stores instructions which enable the processor 114 (or other device) to perform at least some of the methods disclosed herein as well as (perhaps) others. The memory 116 of the current embodiment also stores data pertaining to such methods user inputs thereto, outputs thereof etc. At least some of the various components of the computer 106 can communicate over any type of bus 118 enabling their operations in some or all of the methods disclosed herein. Such buses include, without limitation, SCSI (Small Computer System Interface), ISA (Industry Standard Architecture), EISA (Extended Industry Standard Architecture), etc., buses or a combination thereof. With that having been said, it might be useful to now consider some aspects of the disclosed subject matter.

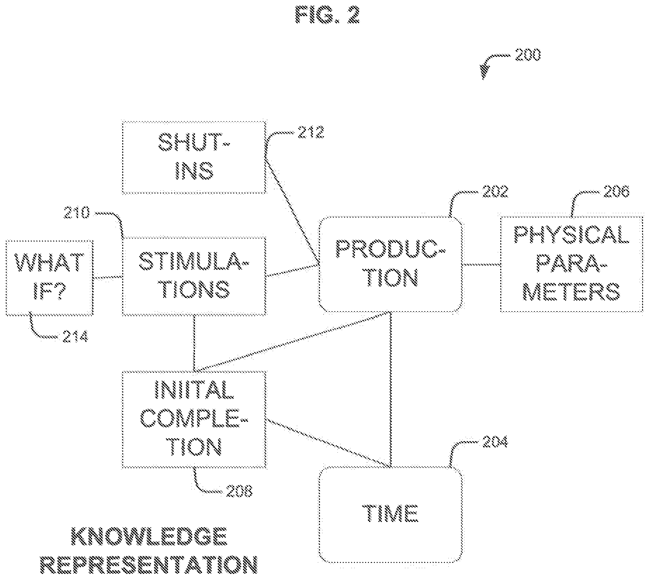

Fig. 2 illustrates a knowledge representation of a well. The knowledge representation 200 of the current embodiment is an open universe, generative model and is configured to probabilistically analyze and/or forecast production of many wells 14. Moreover, in some embodiments, the knowledge representation 200 of the well 14 can be based on Bayesian statistics, the Dempster-Schafer theory, and/or similar mathematical conceptsas well as physical laws and their related equations. The knowledge representation 200 could be based on a generalized graphical model, i.e. not necessarily a directed graphical model that is typical of many generative models. It could also be optionally expressed using one of the many languages available for such purposes. For example BUGs (WinBUGS), iBALL, Church, BLOG (BayesianLOGic), and or Alchemy. With reference again to Fig. 1. the knowledge representation 200 can model an abstraction of the fluid and or gas flow of multiple production regimes by using Boyle's and Darcy's (and/or other) laws to predict fluid flow in a well 14. Thus, the knowledge representation 200 can model the flow in the well 14 as if various gases and/or liquids are flowing through multiple, linked chambers 40, 42, and/or 44.

The knowledge representation 200 models (inter alia) the production 202 of the well 14, time 204 (into production), various physically-based parameters 206 of the well 14, the initial completion 208 of the well 14, secondary stimulations) 210 thereof, its shut-ins 212 (if any), and various potential what-if scenarios 214. Of course, the knowledge representation 200 could model a different mix of factors if desired. For instance, the knowledge representation could include factors and or parameters pertinent to choke size, fluid pressure, multi-phase production, rock permeability, pay zone thickness, formation porosity, fracture length and geometry, adsorption, well geometry, etc.

From a physical perspective, the well's modeled production 202 depends on physical factors of the well 14 for which the knowledge representation 200 includes physically-based parameters (in various user-setected/user-determined equation types) modeling those physical factors (i.e., physically-based parameters 206). That production (in the real world and analytically) often depends on conditions present at the as-modeled initial completion 208 of the well. For instance, the initial well pressure often contributes to the determination of the peak of a well's decline curve. That decline curve usually tails off in an exponential manner with the current value relating back to the initial production (whether the timing of the initial completion 208 is known or not). Other production-related (or potentially production-influencing) factors and/or events might also affect the real-world production of the well 14. Accordingly, the knowledge representation 200 of the current embodiment can model these other factors. For instance, both secondary stimulations 210 (for instance, multiple-stage, initial simulations) and shut-ins 212 might occur in the real-world and can be modeled accordingly in the knowledge representation 200 if desired.

In the real-world, each of these factors can affect the production of the well 14. Thus, the knowledge representation 200 models them thereby linking the underlying physical phenomenon and the statistical probabilistic techniques incorporated in the knowledge representation 200 of embodiments. The underlying physical formulas and probabilistic techniques thus involve certain physically-based parameters which can be found by training the knowledge representation 200 of various embodiments with historic production data. Moreover, the knowledge representation 200 of the current embodiment posits that the decline curve for a well 14 generally has a shape described by a plurality of decaying exponential curves augmented by various "pulses."

Those pulses can be caused by a variety of circumstances. For instance, should an owner/operator shut-in a well 14, the pressure in the well 14 will usually rise (while production is negligible) thereby enabling a production surge (or pulse) when the owner-operator returns the well 14 to production. In other circumstances, the well 14 might suffer a leak of sorts depending on the amount of production forfeited. For instance, some leaks might cause oil to be captured in a retention pond rather than fed to the common collection point or into the production stream. Production, for the affected well 14, would likely fall as a result. On the other hand, should the well 14 be stimulated, its production might increase in the long run. Of course, during the lifetime of a well 14 certain events might precipitate other pulses, temporary production losses/declines, and/or anomalous production.

Most pulses, whether positive or negative and according to embodiments, can be treated as a term(s) of an equation and which has various parameters reflecting the physical features of the well. Statistics describing those physically-based parameters (and/or terms) can be extracted from available (and noisy) production data) by training the knowledge representation 200 with that historic production data. For instance, probabilistic ranges for those parameters can be identified and used to forecast future production (and or to estimate past production) and/or probabilistic ranges there for.

Perhaps, at this juncture, it might be helpful to discuss, in general, probabilistic interference models such as those illustrated by Fig. 2. In these models, each nude (for instance, production 202, physically-based parameters 206, etc.) contains directions for computing its value (and/or probability) based on values in other nodes connected to it. Unconnected nodes are often conditionally independent given values in nodes pointing to them. Inference algorithms coupled to such models can determine the structure(s) of the model and the values of the various nodes given observable data regarding the modeled system, object, behavior, etc. Sampling such models also allows inference algorithms to quantify the uncertainty associated with these values.

Often, statisticians use the term "generative model" to describe methods in which attributes, variables, parameters, etc. of selected scenarios (also known as a "worlds"') are assigned specific values. Statisticians refer to this part of these methods as instatiating the parameters. Some instantiations can he deterministic. But others can be based on probability distributions or conditional probability distributions (CPDs) which arc parameterized by the values of other already instantiated variables. Generative models in which there is no bound on the number of instantiated variables are often referred to as open-universe models.

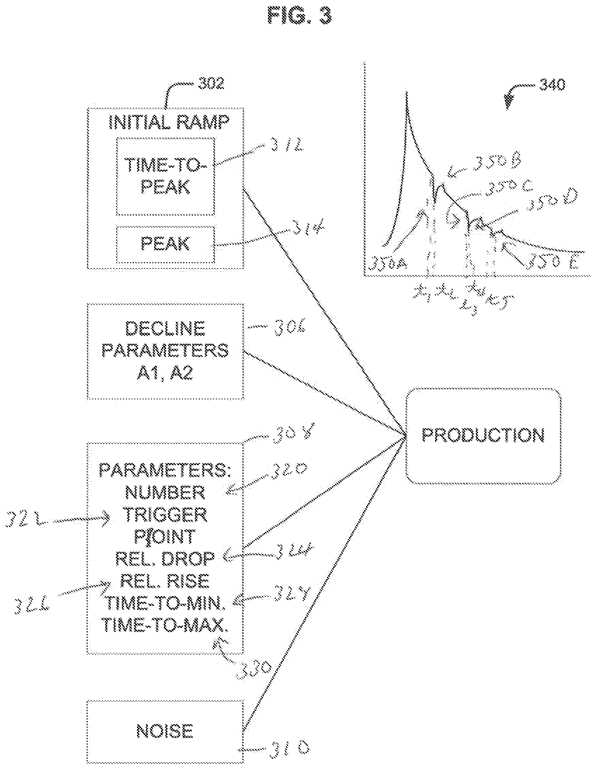

Fig. 3 illustrates a knowledge representation of the production of a well. More specifically, Fig. 3 illustrates a production 300, an initial ramp up 302, subsequent pulses 304. decline parameters 306. pulse parameters 308, noise 310, atime-to-peak 312 distribution, a peak production distribution 314, first decline coefficients al, second decline coefficients a2. a number of pulses 320, their trigger points t1-t5, relative drops 324, relative rises 326. times-to-minimum 328, and times-to-maximum 330. Fig. 3 also illustrates a somewhat simplified production plot 340.

The production plot 340 reflects the likelihood that the time-varying production for a given well 14 is or will reflect a number of peaks 350 or troughs which follow/accompany various events during the life of the well 14. A ramp up will usually precede each peak 350 with declines often follow ing those peaks 350. Of course, for troughs, the declines precede the trough with a ramp up following it. For instance. Fig. 3 shows five peaks 350A-E (and/or troughs) preceded by corresponding ramps and followed by corresponding declines 352A-E(when viewed one at a time). Moreover, each ramp up/decline will begin at a particular trigger point (or time) t1-t5. Of course, the production of a typical well 14 combines these peaks 350 into a piece-wise continuous production plot 340 which at any given time reflects the cumulative affects of all proceeding peaks 350 (along with the corresponding individual ramps and/or declines).

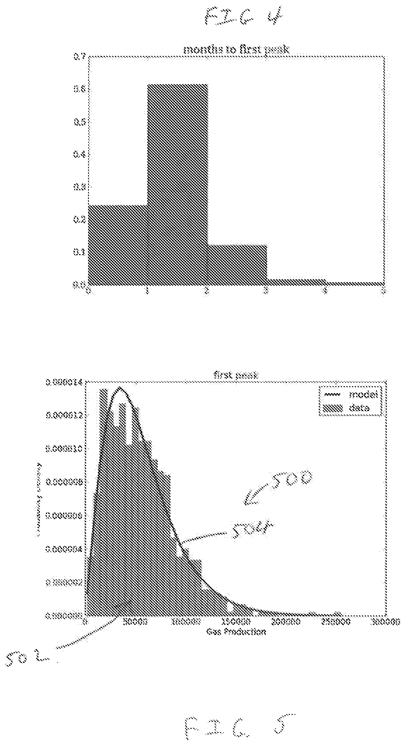

As noted elsewhere herein. Fig. 3 illustrates that for any given well 14, the knowledge representation 200 can model an initial ramp up 302 of its production 300. Ordinarily, the initial completion of the well 14 will trigger the initial ramp up 302 of production 300. However, it might be the situation that no (or little) historic production data might be available for a particular well 14, or that a well 14 is being, has been, or will be placed in production after a some lengthy period. In the alternative, or in addition, it might be the situation that an owner/operator has stimulated a well 14. In such situations, it might be appropriate to model and/or treat the first, subsequent pulse 304 as an initial ramp up 302. It might, furthermore, be appropriate to model these initial ramp ups 302 as linear functions with an unknown (but probabilistic) time-to-peak 312 distribution. For at least some wells 14, the collection of time-to-peaks 312 for a well 14 can be treated as a discrete probability distribution. Fig. 4 illustrates one such (historic) time-to-peak 312 distribution as it was learned from training data.

Fig. 5 illustrates a gamma distribution of peak-production data. The gamma distribution 500 illustrated by Fig. 5 includes the historic peak production data 502 as well as a plot 504 of the modeled data. Note that the height of each peak is usually independent of the time it took for the corresponding well 14 to reach that peak production. Taken together, the collection of peaks gives rise to the gamma distribution 500 and the physically-based parameters characterizing its shape, location, and scale. Of course, the peak production data 502 illustrated by Fig. 5 is a portion of the historic data used to train the knowledge representation 200 of the current embodiment. Thus. Figs. 4 and 5 provide data related to the time to reach the first peak for a given well 14 as well as the peak production(s) reached by that well 14.

From the first peak, production for a large majority of wells 14 will decline in manners reflected in their corresponding decline curves. Corresponding decline (production) equations can he found by training the knowledge representation 200 with historic (training) production data for the well. The form (or shape) of the decline curve for a given well 14, of course, can be described by a decline equation including, but not limited to, hyperbolic, exponential, Aprs, elliptical and modified elliptical equations. Moreover, it has been found that decline equations which combine two (or more) exponential terms at various times during a well's production can be helpful in forecasting future production. For a two exponential term, two trigger point initial production and a second trigger point) model, one potentially helpful decline equation is:

$$qt = q0(e^{\wedge}(-a1 * t) + e^{\wedge}(-a1 * p) * e^{\wedge}(-a2*t))/(1 + e^{\wedge}(-a1 * p)) \qquad \text{Eq. 1}$$

Where: $1$ = time in production
$q_0$ = initial production (flow rate)
$a_1$ = first decline coefficient
$a_2$ = second decline coefficient
$p$ = trigger point for second decline term/coefficient

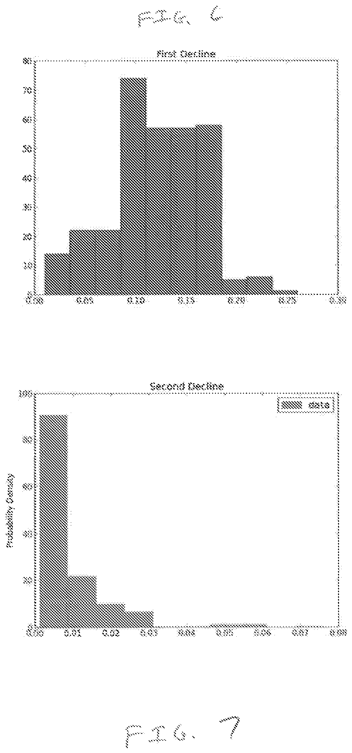

In Equation 1 of the current embodiment, the first decline coefficient a1 is modeled as having a Gaussian distribution (see Fig. 6) the coefficients of which are learned by training the knowledge representation 200 with historic production data. The second decline coefficient a2 is modeled as having an exponential distribution again with coefficients learned via training the knowledge representation 200. See Fig. 7. These decline coefficients a1 and a2 can be modeled as being independent of one another. However, that need not be the case. Rather, some data suggests that these decline coefficients a1 and a2 can exhibit a weak correlation. More specifically, some data suggests that they can have a correlation coefficient of approximately 0.2578 with a Pearson product-moment correlation coefficient (p-value) of 3e-7.

Regarding the pulses 320. the number of pulses 320 in a production sequence (or some other time frame during the life span of a given well 14) can be treated as a Poisson distribution. The average rate associated with that distribution could be parameterized by a monthly rate although other time frames (annual, weekly, etc.) can be used to define the rate. Moreover, the location of each pulse 320 can be modeled as being uniformly distributed over the production period.

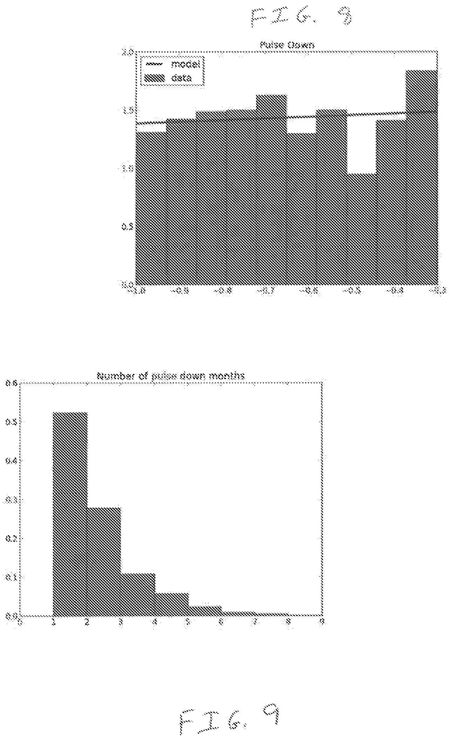

With reference again to Fig. 3. each pulse 320 can be modeled as including a down edge and an up edge. The relative drop 324 (rise) during a down pulse 320 can be modeled as having a linear distribution between, in some situations, -1 and -03 or even higher negative numbers if desired. However, the -1 to -0.3 range was learned via training a knowledge representation 200 with historic production data. See Fig. 8. The time to reach the minimum production (or time-to-minimum 328) for a given down pulse 320 can be modeled as a discrete distribution, again, learned from training the knowledge representation 200. See Fig. 9.

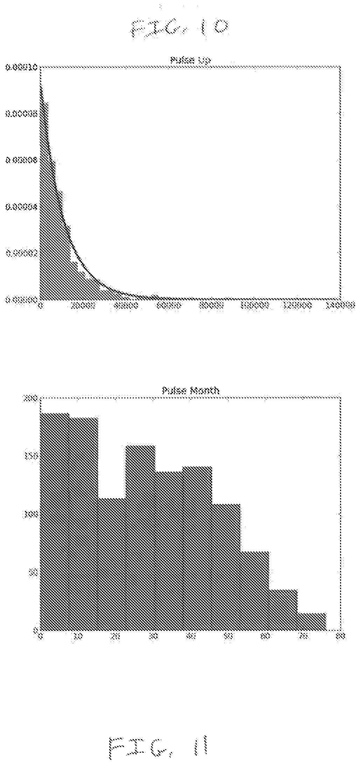

Moreover, the relative rise 326 in production during the up edge of a pulse 320 can be modeled as an exponential distribution with physically-based parameters learned from training the knowledge representation 200. See Fig. 10. The time to reach the (local) maximum (or time-to-maximum 330) is modeled as a discrete distribution in accordance with the current embodiment and which is also learned from training data. See Fig. 11.

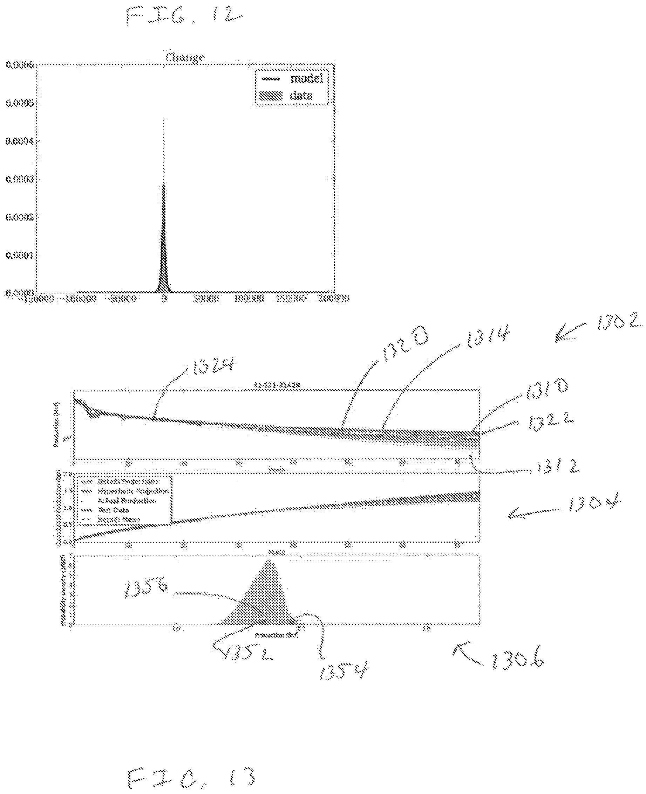

Still with reference to Fig. 3, and as disclosed elsewhere herein, production data contains a relatively large amount of noise. That noise comes from a variety of sources from mechanical/electrical failures rendering that data unavailable, unreliable, etc. to operational issues and other sources. For instance, allocated production figures might be (or become) inaccurate, well tests might fail to validate those allocated production figures accurately, etc. Moreover, this noise tends to occur in a small range near zero and thus, the knowledge representation 200 of embodiments models this noise 310 with a Laplacian distribution (see Fig. 12). The knowledge representation 200. again, is trained to determine the parameters associated with the Laplacian noise 310.

Modeling the noise 310 with a Gaussian or other distribution is possible and indeed is compliant with how the art implicitly models noise elsewhere, perhaps without even realizing it. For instance, one commonly used curve fitting technique used ubiquitously in the art (least squares curve fitting) assumes Gaussian noise rather than Laplacian noise. The inventors realized that Laplacian noise 310 might produce better results and, at least during initial runs of the inference algorithm 124, it did. Furthermore, many geo-physical processes tend to produce Laplacian noise rather than Gaussian noise. For these reasons, and perhaps others, it is believed that Laplacian noise 310 provides satisfactory results for many production related analyses and/or forecasts.

Thus, the knowledge representation 200 of embodiments models production of a well 14 with the foregoing distributions. The knowledge representation 200, furthermore, learns the physically-based parameters associated with those distributions from training data pertaining to the historic production of the well 14. Thus, hereinafter, a trained knowledge representation 200 will be termed a "prior" 140 and it can provide some guidance as to the production which might be expected of the well 14 or that had occurred. "Thus, the prior 140 itself is a useful outcome of the current embodiment. However, for forecasts, the knowledge representation 200 can be sampled by the inference algorithm 124 (see Fig. 1) to converge on a posterior distribution 134 for future production from the well 14.

More specifically, the inference algorithm 124 of embodiments executes a sequence of Markov Chain Monte Carlo (MCMC) moves to converge on a posterior distribution 132 for the physically-based parameters of the prior 140. Moreover, after each MCMC move, the inference algorithm 124 executes an iteration of the Metropolis-Hastings acceptance algorithm and accepts or rejects the sample from that move accordingly. Samples thus drawn (and accepted) will usually converge to a satisfactory posterior distribution 134 of the well's production. Of course, those samples created during the initial burn-in period (while the inference algorithm 124 is converging on the posterior distribution 132) can be discarded.

Once the posterior distribution 132 converges, it can be used to examine what the historic production "was" in a probabilistic sense. The converged posterior distribution 132 can also be used to predict, project, and/or forecast future production. These forecasts can be output in the form of histograms, P90 distributions, estimated ultimate recovery (EUR) distributions and/or other statistical distributions for the well 14. Moreover, the uncertainty associated with the production (past, present, and/or future) can also be quantified in accordance with these distributions.

In one embodiment, the MCMC moves are as follows and often lead to rapid convergence. Indeed, the inference algorithm 124 can use sparse sampling to reduce the computing resources used during the MCMC moves. Furthermore, during some MCMC moves the inference algorithm 124 draws a full sample (including one or more pulses 320) from the knowledge representation 200. The inference algorithm 124 then, in accordance with the current embodiment, alters the first decline coefficient a1 by drawing from the prior 140. The inference algorithm 124 can also alter the second coefficient a2 in a similar manner. Moreover, the inference algorithm 124 next alters the time-to-peak 312 and peak height 314 of the initial production 300 by drawing from the prior 140 (in accordance with the current embodiment).

The inference algorithm 124 can also alter a subsequent pulse by drawing from the prior 114. For instance, the inference algorithm 124 can pick a particular subsequent pulse 304 at random and alter its time-to-minimum 328, time-to-maximum 330. and/or location (trigger point t1). The inference algorithm 124 can also alter its relative drop 324 and relative rise 326. Thus, by drawing on the prior 140, the inference algorithm 124 can alter one or more subsequent pulses 304.

Furthermore, the inference algorithm 124 can create a subsequent pulse 304 by drawing its physically-based parameters from the prior 140, It can also pick an existing subsequent pulse 304 from the prior 140 and remove it. With continuing reference to Fig. 3, the inference algorithm 124can randomly pick another subsequent pulse 304 and alter all of its physically-based parameters by sampling and/or drawing from the prior 140, Note that these "draws" are only proposals generated by the inference engine 124 and might he accepted or rejected. In some embodiments, only the draws which are accepted become samples and thereby help define the posterior.

In accordance with embodiments, the inference algorithm 124 can also make small (one percent or so) random adjustments to the first and second decline coefficients a1 and a2. Such adjustments can be made by drawing from a standard Gaussian with about one tenth (or some other fraction) of the standard deviation of the respective decline coefficient. Furthermore, during the MCMC moves, the inference algorithm 124 can also make small random adjustments to the height of the initial peak 302 and to the trigger point 322 of a randomly chosen subsequent pulse 304. Inference engines 124 of embodiments use two types of MCMC algorithms. One of these types of such algorithms are those in which new values are proposed for attributes (i.e., parameters) directly from the prior. The second types of such algorithms are those in which small changes are made to the current attribute values. The former type of moves are more consistent with the prior, and are usually readily accepted during the initial moves. However, the latter type or moves are usually consistent with the observed data (or in other words the likelihood) and these moves tend to be accepted more readily as the inference engine 124 starts converging to the optimal values.

Of course other sets of MCMC moves (and/or other types of sampling algorithms such as likelihood-weighted sampling) will work and produce convergence at various rates. For instance, the ordering of these moves could be changed and the method would still likely produce satisfactory results. But, these particular moves were chosen by an experienced statistician and have produced satisfactory results. Whichever set of MCMC moves is used, the converged posterior distribution 140 can be used to forecast the production for the well 114. Indeed, in some runs of the inference algorithm 124, it produced roughly a million high-probability scenarios or hypothesis from which possible production scenarios can be sampled to produce production statistics regardless of noisy input production data. Currently, these scenarios can be developed in under a day and projected forward to estimate EUR, NPV (net present value), associated investment risk, portfolio valuation, etc. Moreover, instead of a single, fixed, deterministic decline curve, the inference algorithm 124 outputs a production distribution and/or a risk spread thereby allowing users to evaluate not only EUR forecasts but also the risk associated with them.

Fig. 13 illustrates a well forecast. More specifically, Fig. 13 illustrates the results from a run of the inference algorithm 124 on the prior 140, Plot 1302 illustrates a production distribution (as a probabilistic volumetric flow rate) while plot 1304 illustrates a cumulative production distribution. Meanwhile, plot 1306 illustrates the probability density for the cumulative production forecast at some select time in the future. Moreover, plots 1310 and 1312 show the upper and lower ranges of the forecast distributions generated by the inference algorithm 124, prior 140, and/or knowledge representation 200. For comparison purposes, plots 1314, 1320, and 1322 show (respectively) the mean forecast predicted by the inference algorithm 124; the forecast made by a hyperbolic model; and the estimated actual production of the well 14. Some test data measured at the wellhead (which was used to train the knowledge representation 200) is also illustrated by plot 1324.

Note that the mean forecast (plot 1314) predicted the actual production (plot 1322 as measured at the wellhead) more closely than the hyperbolic forecast (plot 1320) which was manually chosen by a petroleum engineer in a conventional fashion. Indeed, the hyperbolic forecast was off, high, by the end of the forecast period while the inference algorithm (plot 1314) was fairly near the actual production (plot 1322). Furthermore, the inference algorithm 124 forecast varied from the actual production by quite a bit less than the other forecast models over the forecast period. These results are also illustrated by the forecast cumulative production indicated hy references 1352, 1354. and 1356 of (respectively) the inference algorithm 124, the hyperbolic model, and the actual cumulative production.

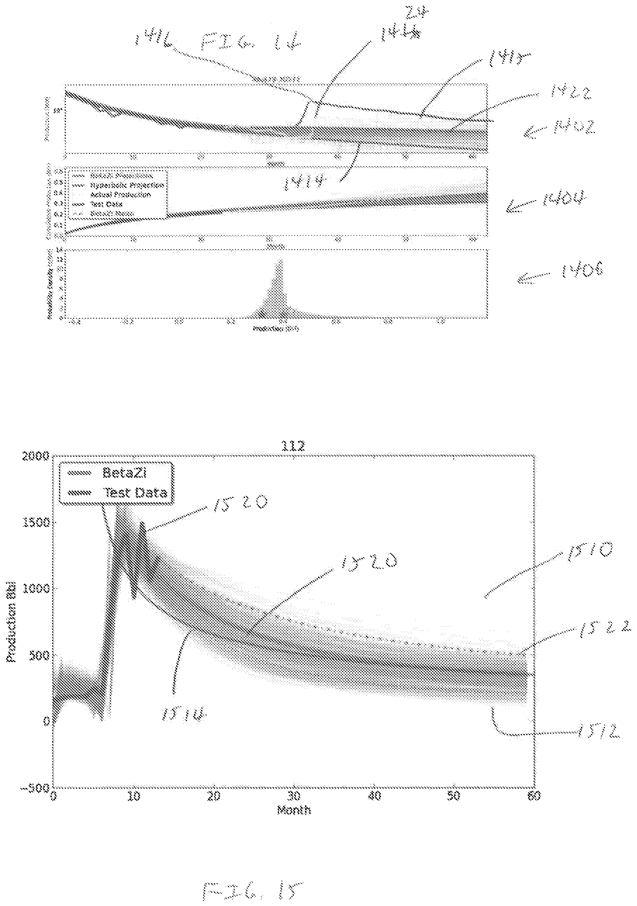

Meanwhile, Fig. 14 illustrates that the inference algorithm 124 is capable of predicting, and did predict, that a stimulation of a well 14 is likely to occur. Again, plot 1402 illustrates the rate of production (as a distribution) while plot 1404 illustrates cumulative production (as a production) with plot 1406 illustrating the probability density for the forecast cumulative production at some select time in the future. Plot 1414, meanwhile, illustrates the mean production forecast generated by the inference engine 124, Perhaps interestingly, plot 1414 does not appear to predict a stimulation. That is because plot 1414 is a mean of many differing forecasts. Most of these forecasts did predict that a stimulation would occur. However, the timing of those predicted stimulations varied (as would be expected) thereby leading to, perhaps, a slight average elevation of plot 1414.

Furthermore, plot 1415 illustrates a particular production forecast developed by the inference algorithm 124 and includes a predicted stimulation 1416. It will be appreciated that plot 1415 represents one of many forecast plots, each of which could have included (and many did include) a predicted stimulation. Similarly, the plot 1422 is the actual estimated production that occurred at this particular well 14 including an actual stimulation 1424. While the particulars of the actual stimulation 1424 and the predicted stimulation 1426 might differ, the inference algorithm 124 did predict that a stimulation would occur and did so in a large fraction of the hypothetical scenarios it sampled.

Fig. 15 illustrates a comparison between a well production forecast (distribution) and well test data. More specifically, Fig. 15 illustrates a probabilistic production forecast for the aggregate production from a multiplicity of (shale oil) wells. 14. Moreover, plots 1510 and 1512 show the upper and lower ranges of the forecast distributions generated by the inference algorithm 124, prior 140, and/or knowledge representation 200. For comparison purposes, plots 1514, 1520, and 1522 show (respectively) the forecasts made by a hyperbolic model, the actual (estimated) production of the well 14, and the mean forecast predicted by the inference algorithm 124. While the hyperbolic model (plot 1514) and the forecast made by the inference algorithm 124 (plot 1522) agree in the long term, it is the inference algorithm 124 (plot 1522) that produced the more accurate forecast (as compared to the actual production shown by plot 1520).

Thus, Fig. 15 illustrates that the inference algorithm 124 and knowledge representation 200 can combine historic production data from multiple wells and can predict their aggregate production more accurately than heretofore possible. In addition, or in the alternative, the inference algorithm 124 and knowledge representation 200 of the current embodiment can operate with data from unconventional wells 14, Furthermore, the data illustrated by Fig. 15 shows that models in accordance with the current embodiment work on conventional wells as well as unconventional shale wells.

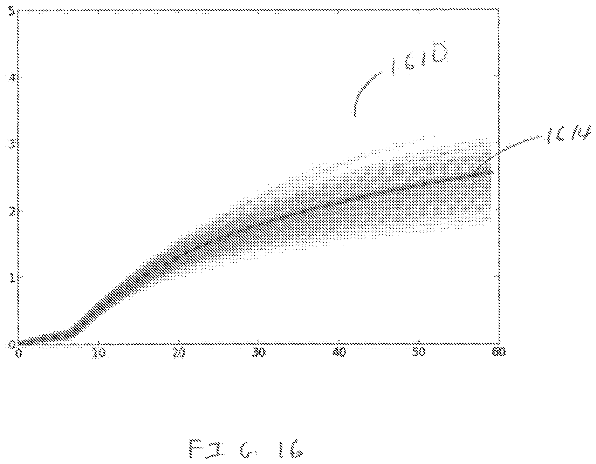

Fig. 16 illustrates a net present value prediction for a well. Indeed, NPV prediction (or, again, a distribution thereof) shown in Fig. 16 also includes an upper limit 1610. a lower limit 1612, and a median 1614 prediction tor the probabilistic range of the NPV. The NPV prediction can be developed, in accordance with embodiments, by coupling the production forecast generated by the inference algorithm 124 to a model of the well's operating costs, the petrochemical market, and or other (probabilistic) financial models. Moreover, those financial models can be probabilistic in nature.

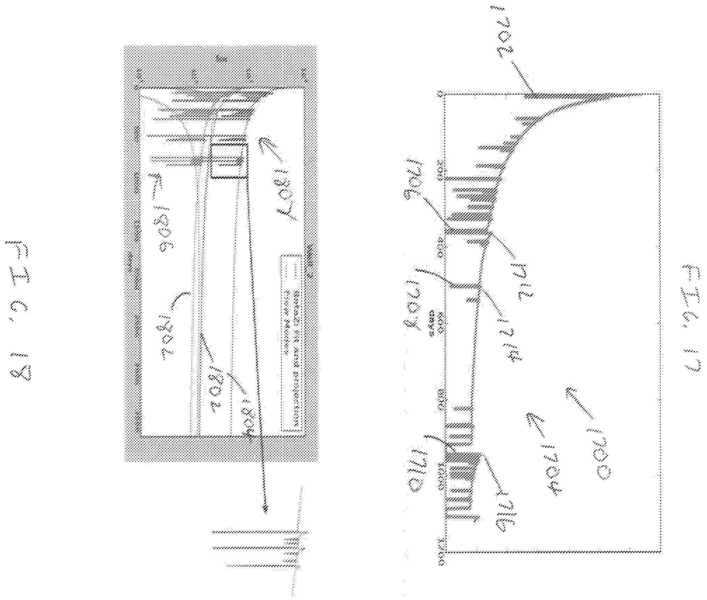

Fig. 17 illustrates predicted anomalous production after well shut-ins. More specifically, in accordance with the current embodiment, the knowledge representation 200 is configured to model gas and/or liquid flow through a well 14 believed to be composed of multiple, linked chambers 40,42, and/or 44 (see Fig. 1) and can predict anomalous flow modes therein and overall flow therefrom following shut-ins and/or other production interruptions. Thus, the production plot 1700 includes an initial ramp up 1702 and a generally declining decline curve 1704 during which shows that the well 14 will likely produce petrochemicals but at a generally slower rate as time progresses. The production plot 1700 isone of many (even millions) that could have been sampled from the prior 140 in accordance with the current embodiment.

The production plot 1700 also includes several production interruptions 1706, 1708, and 1710 during which the well 14 is predicted to be shut-in to differing degrees. As a result, in the model of the well 14, pressure builds during the shut-in 35 until the well 14 is predicted to return to service. As a result, the predicted production interruptions 1706, 1708. and 1710 are followed by predicted positive pulses 1712, 1714, and 1716 (or predicted, temporary increases in production). Those predicted positive pulses 1712, 1714, and 1716 can exceed the production that would have been expected given the general shape of the decline curve 1704.

Fig. 18 illustrates estimated flow modes within a well. In some embodiments, the knowledge representation is configured to model multi-phase flow within a well 14 with multiple, linked chambers 40, 42, 44, and 46. Thus, the knowledge representation 200 can be configured to analyze, estimate, forecast, etc. well production even in the presence of concurrent production of oil, water, natural gas, etc. More specifically, Fig. 18 illustrates four flow-mode proxy plots 1802 corresponding to the estimated flows between the linked chambers 40, 42, and or 44 (see Fig. 1). within a particular well 14. These wells are a stand in between flow regimes that are either natural, man-made, or a combination of the two. Note that the inference algorithm 124 of the current embodiment estimated/forecast these plots by drawing samples from the prior 140. Fig. 18 also illustrates a well production plot 1804 developed by the inference algorithm 124 which reflects the cumulative production at the wellhead 20 (including production from each of the flow modes (plots 1802) with appropriate time delays to account for resistance to the flow modes within, and between, the linked chambers 40. 42. and or 44.

Note that the flow-mode proxy plots 1802 exhibit a number of shut-ins 34 and/or pulses 1806. The cumulative production plot 1804 reflects these shut-ins 34 and pulses 1806 with corresponding shut-ins 34 and pulses 1808. Eq. 2 below includes terms for each of the four flow mode plots 1802 and sums these terms to reach a term corresponding to the cumulative production plot 1804 Of course, multi-phase flow in wells 14 with multiple, linked chambers 40, 42, 44, and 46 can instead be modeled by adjusting the parameters in Eq. 1. Indeed, the MCMC moves will tend to converge on these parameters regardless of which of the many possible types of equations is selected. Nonetheless, Eq. 2 represents another model that can be incorporated into the knowledge representation 200. In this form, the two exponential decline terms have their own coefficients:

$$qt = q1 * e^{\wedge}(-a1 * t) + q2 * e^{\wedge}(-a2 * t). \quad \text{Eq. 2}$$

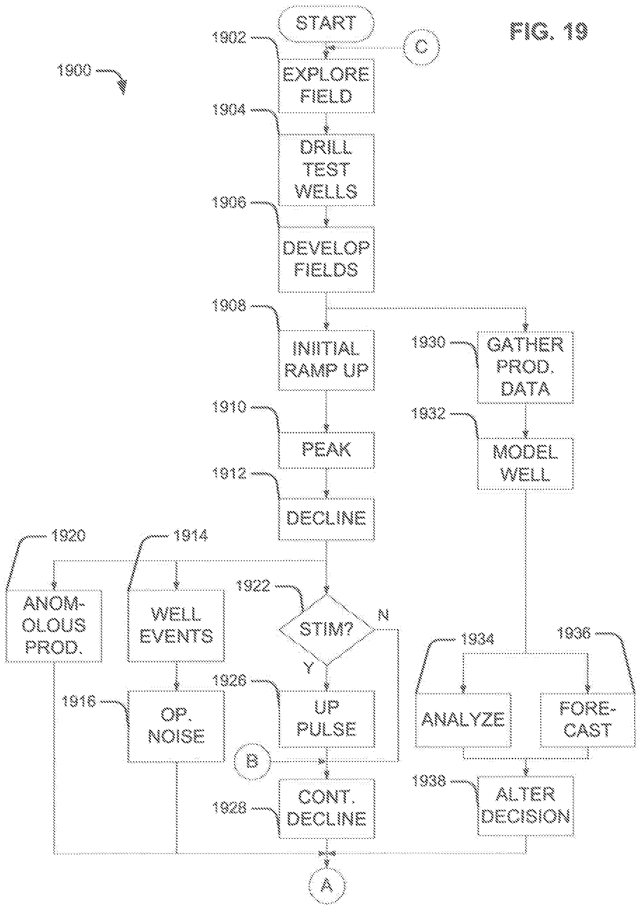

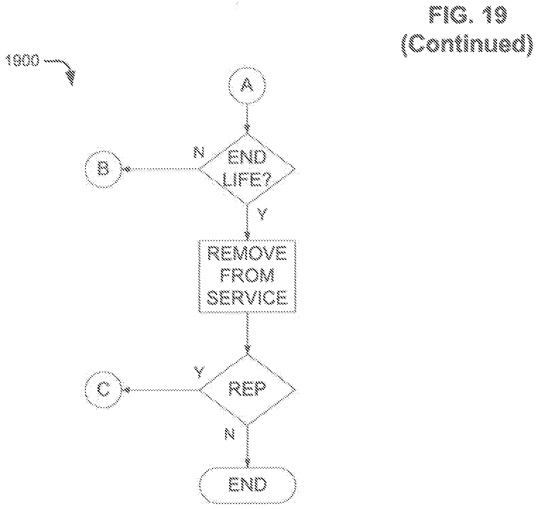

Fig. 19 illustrates a method of modeling well production. More specifically, Fig. 19 illustrates method 1900 which comprises operations such as finding and/or exploring an oilfield 10. See reference 1902. As is known, finding and exploring an oilfield 10 are operations which require a great deal of investment in real estate, equipment, personnel, etc. which stands at risk until oil is found: quantified; proven to be recoverable; wells 14 are located and drilled; and production begins. Indeed, much risk continues in production since, heretofore, it has been difficult to both accurately analyze past production and accurately forecast future production. Of the many difficulties inherent in such practices, noise in that production data which might he available tends to obscure the true production of the wells 14.

Thus, once an owner/operator discovers an oilfield 10, they often drill test wells 14 as indicated at reference 1904. The owner/operators position these wells 14 at strategically chosen locations in the oilfield 10 where, it is hoped, they will provide some initial production as well as early production data with which to value the oilfield 10. Depending on this test (production) data, the owner/operators will decide whether to develop the oilfield 10 and how to do so. For instance, they will decide how much to invest in drilling development wells 14 and where to locate those development wells 14. Again, these operations represent relatively large, risky investments. Thus, having the ability to accurately analyze and/or forecast production in an oilfield 10 represents one way to avoid these risks and to minimize or optimize the related investments. Furthermore, having the ability to quantify the risks associated with those analyzed (past) and/or future production figures represents yet another way to avoid those risks and/or optimize the related investments. Methods, systems, apparatus, etc. provided herein provide relatively accurate production analyses and forecasts as well as relatively accurate quantifications of the risks associated therewith. With reference again to Fig. 19, reference 1906 illustrates the owner/opurators positioning and drilling the wells 14 selected for development.

Of course, as one or more of the wells 14 come "on line" or enter production, they will begin their initial ramp ups. See reference 1908. Furthermore, as time progresses, some of these wells 14 will reach their initial peaks as illustrated at reference 1910. Production will thereafter decline as pressure in the field decreases leading to declining flow modes (within the wells 14) and declining production at the wellheads 16, 18, 20, and 22. See reference 1912.

In the meantime, various well events might occur in one or more of the wells 14 as indicated at reference 1914. These events include, but are not limited to, shut-ins, leaks, pulses, production anomalies, etc. Moreover, ongoing operations often inject noise into the production data that might he available during the foregoing (and subsequent) operations. See reference 1916. Accordingly, anomalous production might be occurring (or appear to be occurring) at one or more of the various wells 14 as illustrated at reference 1920. Indeed, it might be the situation that production data that appears anomalous might be nominal and/or that the opposite might be the situation.

Of course, as the production decline accelerate and/or continue, the owner/operators will reach points at which they decide whether to stimulate certain wells 14 as represented by decision 1922. For those wells 14 selected for stimulations, the owner/operators might decide to partially or entirely take the wells 14 out of production to, perhaps, retrofit the wells 14 for stimulation. As a result, production can drop during preparations for stimulation thereby leading (perhaps) to economic costs associated with the decision to stimulate the wells 14. At some point, the wells 14 will be stimulated with (hopefully) increased production following as suggested by the creation of a positive production pulse. Moreover, that positive pulse might cause a beneficial effect on subsequent production. That is, the production curve for the well 14 might experience a positive offset compared to what it might have been had the stimulation not occurred.

Even so, the stimulations require an investment in equipment, personnel, etc. as well as some economic cost(s) associated with the stimulations. Of course, these stimulation decisions are based on analysis of past production data and forecasts of both the un-stimulated future production and the stimulated future production. Thus, uncertainty and/or errors in these analyses and forecasts increase the amounts of related investments as well as the risks associated therewith. Again, embodiments provide relatively accurate analyses and forecast methods, systems, apparatus, etc. as well as quantified analyses and forecast uncertainties. Following the positive production pulse (see reference 1926), though, the stimulated production will usually continue to decline albeit from an elevated/stimulated level. See reference 1928.

While various operations are occurring, production data can he gathered as illustrated at reference 1930. As disclosed elsewhere herein, it is likely that at least some of that production data will include noise to some degree. Yet, that production data (noise and all) might be the best data available to the owner/operators.

Nonetheless, owner/operators might wish to model a particular well(s) 14. See reference 1932. In accordance with embodiments, they can build a knowledge representation 200 and/or inference algorithm 124 for one or more of the wells 14. Using these components, they can analyze past production data to obtain probabilistic ranges, decline production curves, estimates, etc. of what that past production likely was. Additionally, or in the alternative, they can forecast production to obtain probabilistic ranges, decline/production curves, estimates, etc. of what production likely will be. See references 1934 and 1936 respectively. The owner/operators can review these probabilistic analyses and/or forecasts. Based on their review, the owner/operators can alter their investment, operational, exploration, development, etc. decisions and/or activities. See reference 1938.

Fur instance, at some point, production at one or more wells 14 (or even oilfields 10) might have declined to a point where at it might not be possible to economically operate these wells 14. Accordingly, where the analyses and/or forecasts indicate that likely future production does not justify continued operation of the wells, the owner/operators can decide to discontinue those operations since the economic end of life of those wells 14 has probably been reached. If, though, those analyses and/or forecasts indicate that the economic end of life of some wells 14 has not been reached, the owner/operators can opt to continue operations at those wells 14. Thus, increased accuracy in these sorts of analyses and/or forecasts can render such decisions more certain and or less risky. See references 1940 and 1942. Of course, if desired, method 1900 can be repeated in whole or in part as indicated at reference 1944.

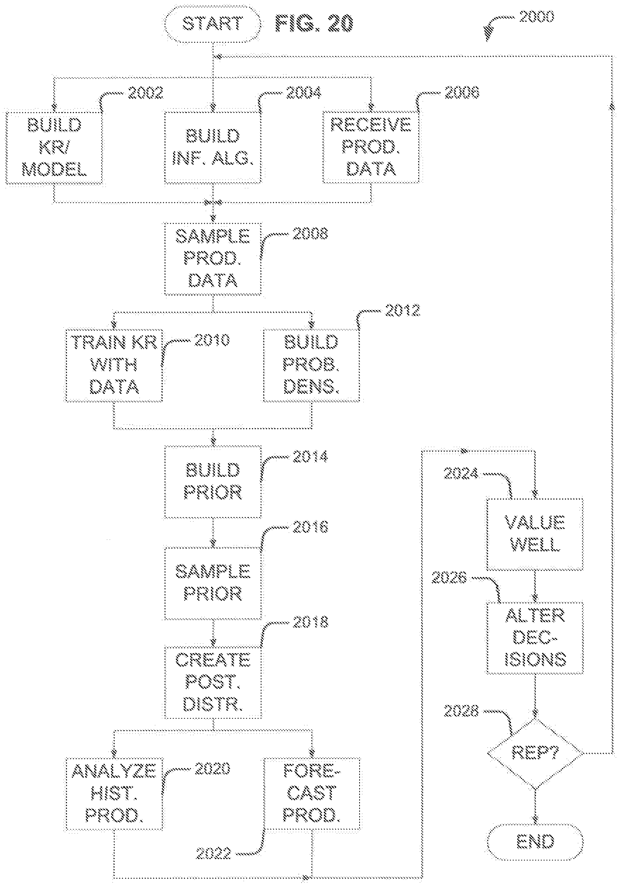

Fig. 20 illustrates another method of modeling well production. More specifically, Fig. 20 illustrates method 2000 which comprises operations such as building a knowledge representation 200 for one or more wells 14. See reference 2002. Method 2000 can also include building an inference algorithm 124 at reference 2004. Additionally, or in the alternative, method 2000 can include receiving, obtaining, gathering, etc. historic production data at reference 2006.

At reference 2008. method 2000 comprises sampling that historic production data with the knowledge representation 200. Thus, the knowledge representation can be trained with the historic production data so that probability densities for various physically-based well parameters are included in the knowledge representation 200. See references 2010 and 2012. Moreover, these operations can result in the building of a prior 140 of the knowledge representation 200 as indicated at reference 2014. Thus, a probabilistic model of the well 14 can be built rather than a fixed, deterministic model Furthermore, a posterior distribution 132 for the production model of the well 14 with which to forecast future production can be built. For instance, the inference algorithm can sample the prior 140 of the knowledge representation 200 to create the posterior distribution 132 of the well model. See reference 2016 and 2018.

Using the model in the knowledge representation 200 and/or the posterior distributions 132 of the well model built by the inference algorithm 124, probabilistic estimates, decline/production curves, valuations, etc. of likely past production can be developed. See reference 2020. In addition, or in the alternative, probabilistic forecasts, decline/production curves, valuations, etc. of likely future production can be developed as indicated at reference 2022. Thus, the well 14 can be valued in a probabilistic manner as shown at reference 2024. Furthermore, based on those probabilistic historical estimates, forecasts, and/or valuations owner/operators can make, refine, alter, etc. investment, exploration, developments, operational, etc. decisions. See reference 2026. Moreover, decision 2028 illustrates that method 2000 can he repeated in whole or in part as desired.

Embodiments provide well analysis and forecasting methods which are unbiased, transparent, repeatable, and which execute rapidly on computers. These models can be fully automated and calibrated for use with oil, gas, water, etc. production. For instance, some methods can produce calibrated P10, P50, P90, etc. numbers. Instead of a single EUR number, various methods produce histograms and outcomes which allow users to explore the probabilistic range of EURs. The P90 numbers (or ranges) provided by some methods enjoy a high degree of confidence (90%) that they will indeed be exceeded in a given time (such as 15 years).

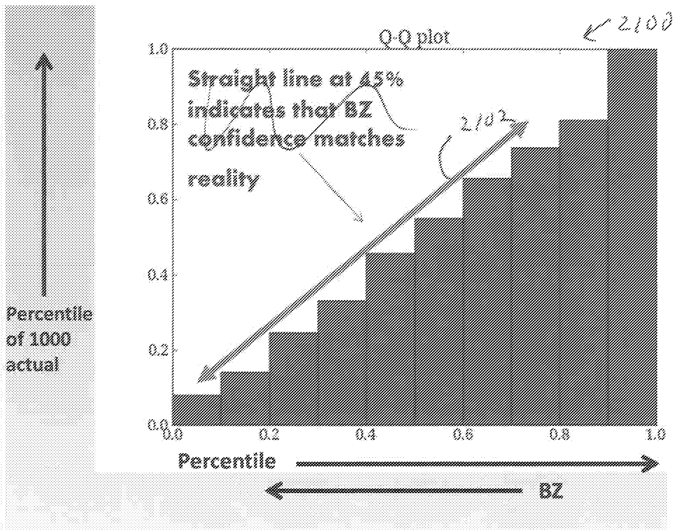

Fig. 21 illustrates some percentile accuracies of a method of modeling well production, Cumulative data suggests that P80 numbers produced by methods disclosed herein were exceeded 78% of the time. Moreover, a graph 2100 of the P80 percentiles (see Fig. 21) produces a straight line 2102 indicating that confidence in these P80 numbers matches reality.

Thus, individual wells can be more accurately compared, ranked, priced, etc. in accordance with embodiments. With regard to portfolio optimization, P90 statistics produced by many such methods are even more reliable since it is unlikely that each well in a portfolio will perform poorly. The abilities of embodiments to model wells and to quantify the uncertainty associated with the wells allows user to optimize their investment in the wells, their development, their operations, their stimulations, etc.

Furthermore, the current disclosure provides tools for analysing past, and forecasting future, well production. Many of these tools are based on the physical features of the well and on probabilistic treatment of historic production data. Moreover, embodiments reduce risks associated with production forecasts (both short term and long term) by providing a range of probabilistic decline curves and by quantifying the uncertainty associated with these curves. Embodiments also, or in the alternative, safeguard trillions of dollars that would otherwise be exchanged based on outdated, manually manipulated decline curves. Owners, operators, national governments, etc. can use these production forecasts to value their reserves with reduced uncertainty.

## CONCLUSION

Although the subject matter has been disclosed in language specific to structural features and or methodological acts, it is to be understood that the subject matter defined in the appended claims is not necessarily limited to the specific features or acts disclosed above. Rather, the specific features and acts described herein are disclosed as illustrative implementations of the claims.

**Claims**

1. An apparatus comprising:

   a processor (114);
   an interface in communication with the processor (114); and
   a memory (116) in communication with the processor (114) and storing processor (114) executable instructions which when executed by the processor (114) cause the processor (114) to perform a method comprising:

   modeling a production (300) of a well (16) using a processor (114);
   determining probability distributions for physical parameters associated with the well (16);
   determining a posterior distribution (134) for the model (122) of the well (16) by sampling the probability distributions for the physical parameters (132) associated with the well (16) and using the processor (114); and
   outputting the posterior distribution (134) for the model (122) of the well (16) via an interface in communication with the processor (114),
   **characterized in that** the modeling further comprises identifying a plurality of production (300) events and wherein the determining of the posterior distribution (134) further comprises training the model (122) of the well (16) with historic data pertinent to the plurality of production (300) events of the well (16) and using the processor (114).

2. The apparatus of claim 1, being further **characterized by** adding Laplacian noise (310) to the model (122) of the well (16) in accordance with geophysical properties of the well (16).

3. The apparatus of claim 1, being further **characterized by** modeling a financial model of the well (16) based on at least the model of the well (16).

4. The apparatus of claim 1, being further **characterized by** using Markov Chain Monte Carlo sampling to converge on the posterior distributions (134) for the model (122) of the well (16).

5. The apparatus of claim 1, wherein the training of the model (122) of the well (16) being further **characterized by** using historical data associated with an initial completion of the well (16), a shut-in of the well (16), a secondary stimulation of the well (16), or a combination thereof.

6. The apparatus of claim 1, wherein the model (122) of the well (16) being further **characterized by** being an open universe, generative model.

7. The apparatus of claim 1, being further **characterized by** determining a posterior distribution (134) for a future production (300) of the well (16) using the posterior distributions (134) for the model of the well (16) and using the processor (114) and outputting the posterior distribution (134) for the future production (300) of the well (16) based on the model (122) of the well (16) and using the processor (114).

8. The apparatus of claim 1, being further **characterized by** determining an estimated ultimate recovery estimate for the well (16) using the posterior distribution (134) for the future production (300) of the well (16).

9. The apparatus of claim 1, being further **characterized by** quantifying an uncertainty associated with the posterior distribution (134) for the future production (300) of the well (16).

10. The apparatus of claim 1, wherein the outputting of the posterior distribution (134) of the well (16) being further **characterized by** outputting a plurality of curves representing the posterior distribution (134) of the well (16).

11. The apparatus of claim 1, being further **characterized by** monitoring a future production (300) of the well (16) and raising an alarm responsive to the future production (300) of the well (16) decreasing to a user-selected probabilistic threshold.

12. A computer readable storage medium storing instructions which when executed by a processor (114) cause the processor (114) to perform a method comprising:

modeling a production (300) of a well (16) using a processor (114), including identifying a plurality of production (300) events;
determining probability distributions for physical parameters associated with the well (16);
determining a posterior distribution (134) for the sparsely-sampled model (122) of the well (16) by sampling the probability distributions for the physical parameters associated with the well (16) using the processor (114); and
outputting the posterior distribution (134) for the sparsely-sampled model (122) of the well (16) using an interface in communication with the processor (114), the computer readable storage medium wherein the method further comprises training the model (122) of the well 16 with historic data pertinent to the production (300) of the well (16) via sparse sampling and using the processor (114).

13. A computer readable storage medium storing processor (114) executable instructions which when executed by the processor (114) cause the processor (114) to perform a method comprising:

modeling a production (300) of a well (16) using a processor (114), including identifying a plurality of production (300) events;
determining probability distributions for physical parameters associated with the well (16) by training the model (122) of the well (16) with historic data pertinent to the production (300) of the well (16) and using the processor (114);
determining a posterior distribution (134) for the model (122) of the well (16) by sampling probability distributions associated for the physical parameters associated with the well (16) using the processor (114); and
outputting the posterior distribution (134) of the model of the well (16) using an interface in communication with the processor (114), wherein the method further comprises using non-Gaussian noise (310).

14. The computer readable storage medium of claim 13, wherein the non-Gaussian noise (310) is Laplacian noise (310).

15. The computer readable storage medium of claim 13, wherein the training the model (122) of the well (16) with historic data pertinent to the well (16) is performed via sparse sampling.

**Patentansprüche**

1. Vorrichtung, umfassend:

einen Prozessor (114);
eine Schnittstelle, die mit dem Prozessor (114) verbunden ist; und
einen Speicher, der mit dem Prozessor (114) verbunden ist, und von einem Speicherprozessor (114) ausführbare Befehle, die bei Ausführen durch den Prozessor (114) bewirken, dass der Prozessor (114) ein Verfahren ausführt, das umfasst:

Modellieren einer Produktion (300) eines Bohrlochs (16) mit Hilfe eines Prozessors (114);
Bestimmen der Wahrscheinlichkeitsverteilungen für physikalische Parameter in Verbindung mit dem Bohrloch (16);
Bestimmen einer A-posteriori-Verteilung (134) für das Modell (122) des Bohrlochs (16) durch Probenahme aus den Wahrscheinlichkeitsverteilungen für die physikalischen Parameter (132) in Verbindung mit dem Bohrloch (16) und Verwendung des Prozessors (114); und
Ausgeben der A-posteriori-Verteilung (134) für das Modell (122) des Bohrlochs (16) über eine Schnittstelle, die mit dem Prozessor (114) verbunden ist,
**dadurch gekennzeichnet, dass** die Modellierung ferner die Identifikation einer Vielzahl von Produktions(300)-Ereignissen umfasst und wobei die Bestimmung der A-posteriori-Verteilung (134) außerdem das Training des Modells (122) des Bohrlochs (16) mit historischen Daten, die für die Vielzahl der Produktions(300)-Ereignisse des Bohrlochs (16) relevant sind, sowie die Verwendung des Prozessors (114), umfasst.

2. Vorrichtung nach Anspruch 1, weiterhin **gekennzeichnet durch** Hinzufügung von laplacischem Rauschen (310) zum Modell (122) des Bohrlochs (16) entsprechend den geophysikalischen Eigenschaften des Bohrlochs (16).

3. Vorrichtung nach Anspruch 1, weiterhin **gekennzeichnet durch** Modellierung eines Finanzmodells des Bohrlochs (16) auf der Grundlage von mindestens dem Modell des Bohrlochs (16).

4. Vorrichtung nach Anspruch 1, weiterhin **gekennzeichnet durch** Verwendung von Markov-Kette-Monte-Carlo-Probenahme zum Konvergieren zu den A-posteriori-Verteilungen (134) für das Modell (122) des Bohrlochs (16).

5. Vorrichtung nach Anspruch 1, wobei das Training des Modells (122) des Bohrlochs (16) weiterhin **dadurch gekennzeichnet ist, dass** historische Daten verwendet werden, die mit einer ersten Komplettierung des Bohrlochs (16), einer Schließung des Bohrlochs (16), einer sekundären Stimulation des Bohrlochs (16) oder einer Kombination von diesen verbunden sind.

6. Vorrichtung nach Anspruch 1, wobei das Modell (122) des Bohrlochs (16) weiterhin **dadurch gekennzeichnet ist, dass** es ein generatives Modell mit offenem Universum ist.

7. Vorrichtung nach Anspruch 1, weiterhin **gekennzeichnet durch** die Bestimmung einer A-posteriori-Verteilung (134) für eine zukünftige Produktion (300) des Bohrlochs (16) mit Hilfe der A-posteriori-Verteilungen (134) für das Modell des Bohrlochs (16) sowie die Verwendung des Prozessors (114) und Ausgabe der A-posteriori-Verteilung (134) für die zukünftige Produktion (300) des Bohrlochs (16) auf der Grundlage des Modells (122) des Bohrlochs (16) sowie die Verwendung des Prozessors (114).

8. Vorrichtung nach Anspruch 1, weiterhin **gekennzeichnet durch** die Bestimmung eines Schätzwerts des Gesamtpotenzials (Estimated Ultimate Recovery; EUR) für das Bohrloch (16) mit Hilfe der A-posteriori-Verteilung (134) für die zukünftige Produktion (300) des Bohrlochs (16).

9. Vorrichtung nach Anspruch 1, weiterhin **gekennzeichnet durch** die Quantifizierung einer Unsicherheit in Verbindung mit der A-posteriori-Verteilung (134) für die zukünftige Produktion (300) des Bohrlochs (16).

10. Vorrichtung nach Anspruch 1, wobei die Ausgabe der A-posteriori-Verteilung (134) des Bohrlochs (16) weiterhin **gekennzeichnet ist durch** die Ausgabe einer Vielzahl von Kurven, die die A-posteriori-Verteilung (134) des Bohrlochs (16) darstellen.

**11.** Vorrichtung nach Anspruch 1, weiterhin **gekennzeichnet durch** die Überwachung einer zukünftigen Produktion (300) des Bohrlochs (16) und Auslösen eines Alarms, der auf die Verringerung der zukünftigen Produktion (300) des Bohrlochs (16) auf einen vom Benutzer ausgewählten Wahrscheinlichkeitsschwellwert reagiert.

**12.** Speicherbefehle für ein computerlesbares Speichermedium, die bei Ausführung durch einen Prozessor (114) bewirken, dass der Prozessor (114) ein Verfahren ausführt, umfassend:

Modellieren einer Produktion (300) eines Bohrlochs (16) mit Hilfe eines Prozessors (114), einschließlich der Identifikation einer Vielzahl von Produktions(300)-Ereignissen;
Bestimmen von Wahrscheinlichkeitsverteilungen für physikalische Parameter in Verbindung mit dem Bohrloch (16);
Bestimmen einer A-posteriori-Verteilung (134) für das einem "Sparse-Sampling" unterzogene Modell (122) des Bohrlochs (16) durch Probenahme aus den Wahrscheinlichkeitsverteilungen für die physikalischen Parameter in Verbindung mit dem Bohrloch (16) mit Hilfe des Prozessors (114); und
Ausgeben der A-posteriori-Verteilung (134) für das einem "Sparse-Sampling" unterzogene Modell (122) des Bohrlochs (16) unter Verwendung einer Schnittstelle, die mit dem Prozessor (114) und dem computerlesbaren Speichermedium verbunden ist, wobei das Verfahren weiterhin umfasst:
Training des Modells (122) des Bohrlochs (16) mit historischen Daten, die für die Produktion (300) des Bohrlochs (16) relevant sind, über "Sparse-Sampling" und Verwenden des Prozessors (114).

**13.** Ausführbare Befehle für einen Speicherprozessor (114) für ein computerlesbares Speichermedium, die bei Ausführung durch den Prozessor (114) bewirken, dass der Prozessor (114) ein Verfahren ausführt, umfassend:

Modellieren einer Produktion (300) eines Bohrlochs (16) mit Hilfe eines Prozessors (114), einschließlich der Identifikation einer Vielzahl von Produktions(300)-Ereignissen;
Bestimmen der Wahrscheinlichkeitsverteilungen für physikalische Parameter in Verbindung mit dem Bohrloch (16) durch Training des Modells (122) des Bohrlochs (16) mit historischen Daten, die für die Produktion (300) des Bohrlochs (16) relevant sind, und Verwendung des Prozessors (114);
Bestimmen einer A-posteriori-Verteilung (134) für das Modell (122) des Bohrlochs (16) durch Probenahme aus verbundenen Wahrscheinlichkeitsverteilungen für die physikalischen Parameter in Verbindung mit dem Bohrloch (16) mit Hilfe des Prozessors (114); und
Ausgeben der A-posteriori-Verteilung (134) des Modells des Bohrlochs (16) mit Hilfe einer Schnittstelle, die mit dem Prozessor (114) verbunden ist, wobei das Verfahren weiterhin umfasst:
Verwenden von nicht-Gauss'schem Rauschen (310).

**14.** Computerlesbares Speichermedium nach Anspruch 13, wobei das nicht-Gauss'sche Rauschen (310) ein laplacisches Rauschen (310) ist.

**15.** Computerlesbares Speichermedium nach Anspruch 13, wobei das Training des Modells (122) des Bohrlochs (16) mit historischen Daten, die für das Bohrloch relevant sind, mit "Sparse-Sampling" durchgeführt wird.

**Revendications**

**1.** - Appareil comprenant :

un processeur (114) ;
une interface en communication avec le processeur (114) ; et
une mémoire (116) en communication avec le processeur (114) et stockant des instructions pouvant être exécutées par le processeur (114) qui, lorsqu'elles sont exécutées par le processeur (114), amènent le processeur (114) à réaliser un procédé comprenant :

modéliser une production (300) d'un puits (16) à l'aide d'un processeur (114) ;
déterminer des distributions de probabilités pour des paramètres physiques associés au puits (16) ;
déterminer une distribution à posteriori (134) pour le modèle (122) du puits (16) par échantillonnage des distributions de probabilités pour les paramètres physiques (132) associés au puits (16) et à l'aide du processeur (114) ; et
délivrer la distribution à posteriori (134) pour le modèle (122) du puits (16) par l'intermédiaire d'une interface en communication avec le processeur (114),

**caractérisé par le fait que** la modélisation comprend en outre l'identification d'une pluralité d'événements de production (300) et dans lequel la détermination de la distribution à posteriori (134) comprend en outre l'apprentissage du modèle (122) du puits (16) avec des données historiques pertinentes pour la pluralité d'événements de production (300) du puits (16) et à l'aide du processeur (114).

2. - Appareil selon la revendication 1, **caractérisé en outre par** l'ajout d'un bruit laplacien (310) au modèle (122) du puits (16) conformément à des propriétés géophysiques du puits (16).

3. - Appareil selon la revendication 1, **caractérisé en outre par** la modélisation d'un modèle financier du puits (16) sur la base au moins du modèle du puits (16).

4. - Appareil selon la revendication 1, **caractérisé en outre par** l'utilisation d'un échantillonnage de Monte Carlo par chaîne de Markov pour converger sur les distributions à posteriori (134) pour le modèle (122) du puits (16).

5. - Appareil selon la revendication 1, dans lequel l'apprentissage du modèle (122) du puits (16) est en outre **caractérisé par** l'utilisation de données historiques associées à un achèvement initial du puits (16), à une fermeture du puits (16), à une stimulation secondaire du puits (16) ou à une combinaison de ceux-ci.

6. - Appareil selon la revendication 1, dans lequel le modèle (122) du puits (16) est en outre **caractérisé par le fait qu'**il est un modèle génératif à univers ouvert.

7. - Appareil selon la revendication 1, **caractérisé en outre par** la détermination d'une distribution à posteriori (134) pour une production future (300) du puits (16) à l'aide des distributions à posteriori (134) pour le modèle du puits (16) et à l'aide du processeur (114) et la délivrance de la distribution à posteriori (134) pour la production future (300) du puits (16) sur la base du modèle (122) du puits (16) et à l'aide du processeur (114).

8. - Appareil selon la revendication 1, **caractérisé en outre par** la détermination d'une estimation de récupération finale estimée pour le puits (16) à l'aide de la probabilité à posteriori (134) pour la production future (300) du puits (16).

9. - Appareil selon la revendication 1, **caractérisé en outre par** la quantification d'une incertitude associée à la distribution à posteriori (134) pour la production future (300) du puits (16).

10. - Appareil selon la revendication 1, dans lequel la délivrance de la distribution à posteriori (134) du puits (16) est en outre **caractérisée par** la délivrance d'une pluralité de courbes représentant la distribution à posteriori (134) du puits (16).

11. - Appareil selon la revendication 1, **caractérisé en outre par** la surveillance d'une production future (300) du puits (16) et le déclenchement d'une alarme en réponse à la diminution de la production future (300) du puits (16) à un seuil probabiliste sélectionné par l'utilisateur.

12. - Support de stockage lisible par ordinateur stockant des instructions qui, lorsqu'elles sont exécutées par un processeur (114), amènent le processeur (114) à réaliser un procédé comprenant :

    modéliser une production (300) d'un puits (16) à l'aide d'un processeur (114), comprenant l'identification d'une pluralité d'événements de production (300) ;
    déterminer des distributions de probabilités pour des paramètres physiques associés au puits (16) ;
    déterminer une distribution à posteriori (134) pour le modèle faiblement échantillonné (122) du puits (16) par échantillonnage des distributions de probabilités pour les paramètres physiques associés au puits (16) à l'aide du processeur (114) ; et
    délivrer la distribution à posteriori (134) pour le modèle faiblement échantillonné (122) du puits (16) à l'aide d'une interface en communication avec le processeur (114), le support de stockage lisible par ordinateur dans lequel le procédé comprend en outre l'apprentissage du modèle (122) du puits (16) avec des données historiques pertinentes pour la production (300) du puits (16) par l'intermédiaire d'un échantillonnage peu dense et à l'aide du processeur (114).

13. - Support de stockage lisible par ordinateur stockant des instructions pouvant être exécutées par un processeur (114) qui, lorsqu'elles sont exécutées par le processeur (114), amènent le processeur (114) à réaliser un procédé comprenant :

modéliser une production (300) d'un puits (16) à l'aide d'un processeur (114), comprenant l'identification d'une pluralité d'événements de production (300) ;
déterminer des distributions de probabilités pour des paramètres physiques associés au puits (16) par apprentissage du modèle (122) du puits (16) avec des données historiques pertinentes pour la production (300) du puits (16) et à l'aide du processeur (114) ;
déterminer une distribution à posteriori (134) pour le modèle (122) du puits (16) par échantillonnage de distributions de probabilités associées pour les paramètres physiques associés au puits (16) à l'aide du processeur (114) ; et
délivrer la distribution à posteriori (134) du modèle du puits (16) à l'aide d'une interface en communication avec le processeur (114), le procédé comprenant en outre l'utilisation un bruit non gaussien (310) .

14. - Support de stockage lisible par ordinateur selon la revendication 13, dans lequel le bruit non gaussien (310) est un bruit laplacien (310).

15. - Support de stockage lisible par ordinateur selon la revendication 13, dans lequel l'apprentissage du modèle (122) du puits (16) avec des données historiques pertinentes pour le puits (16) est réalisé par l'intermédiaire d'un échantillonnage peu dense.

## FIG. 1

FIG. 2

200

SHUT-
INS — 212

210 —

WHAT
IF? — 214

STIMULA-
TIONS

PRODUC-
TION — 202

PHYSICAL
PARA-
METERS — 206

INIITAL
COMPLE-
TION — 208

TIME — 204

KNOWLEDGE
REPRESENTATION

## FIG. 3

FIG 4

months to first peak

first peak

FIG 5

FIG. 6

First Decline

Second Decline

FIG. 7

FIG. 9

FIG.9

FIG. 10

Pulse Up

FIG. 11

FIG. 12

FIG. 13

FIG. 14

FIG. 15

FIG. 16

FIG. 17

FIG. 18

FIG. 19

FIG. 19
(Continued)

1900

A

N ← END LIFE? → Y

B

REMOVE FROM SERVICE

Y ← REP → N

C

END

FIG. 20

Q-Q plot

2100

Straight line at 45% indicates that BZ confidence matches reality

2102

1.0

0.8

0.6

0.4

0.2

0.0

Percentile of 1000 actual

0.0    0.2    0.4    0.6    0.8    1.0

Percentile ➜

⬅ BZ

**REFERENCES CITED IN THE DESCRIPTION**

**Patent documents cited in the description**

- US 20080162099 A1